# EUROPEAN PATENT SPECIFICATION

(11) **EP 3 452 547 B1**
(45) Date of publication and mention of the grant of the patent: **16.07.2025**
(21) Application number: 17722009.2
(22) Date of filing: 04.05.2017
(51) Int. Cl.: C08L 77/06, B29C 45/17, C08K 3/16, C08K 5/00, C08K 5/3465, C08K 7/14, C08L 77/02

(54) **POLYAMIDE MOULDING COMPOSITION AND MOULDED ARTICLE MADE HEREFROM**
POLYAMIDFORMZUSAMMENSETZUNG UND DARAUS HERGESTELLTER FORMKÖRPER
COMPOSITION DE MOULAGE DE POLYAMIDE ET ARTICLE MOULÉ FABRIQUÉ À PARTIR DE CEUX-CI

(30) Priority: 04.05.2016 EP 16168402
(43) Date of publication of application: 13.03.2019
(73) Proprietor: EMS-CHEMIE AG, 7013 Domat/Ems (CH)
(72) Inventor: FUJII, Takamasa, Ota-ku Tokyo 144-0033 (JP); HATTA, Minoru, Ota-ku Tokyo 144-0033 (JP); ENDO, Makoto, Ota-ku Tokyo 144-0033 (JP); LAMBERTS, Nikolai, 7402 Bonaduz (CH)
(74) Representative: Pfenning, Meinig & Partner mbB
(86) International application number: PCT/EP2017/060679
(87) International publication number: WO 2017/191269

(56) References cited:
- EP-A1- 3 138 878
- WO-A1-2015/166896
- JP-A- 2014 177 560
- JP-A- H11 279 399
- US-A1- 2013 281 589
- US-A1- 2013 338 261
- JITKA KUCEROVÁ: "Nucleating and clarifying agents for polymers", 30 May 2008 (2008-05-30), XP055276494, Retrieved from the Internet <URL:http://digilib.k.utb.cz/bitstream/handle/10563/7290/kucerová_2008_bp.pdf?sequence=1> [retrieved on 20160531]

## Description

The present invention refers to a polyamide moulding composition consisting of the following components:
(A) 30 to 77.6 % by weight of at least one partially crystalline polyamide consisting of at least one diamine and at least one aromatic dicarboxylic acid, whereupon the at least one diamine has 4 to 20 carbon atoms and is selected from a group of diamines consisting of linear aliphatic diamines, branched aliphatic diamines, cycloaliphatic diamines and araliphatic diamines, wherein said at least one partially crystalline polyamide is selected from the group consisting of
   - PA 6T/6, PA 6T/610, PA 6T/612, PA 6T/10I, PA 6T/12T,
   - PA 6T/6I having 50-80 mol% hexamethyleneterephthalamide units and 20-50 mol% hexamethyleneisophthalamide units,
   - a semicrystalline polyamide 6T/6I/612/X having 60-75 wt.-% hexamethyleneterephthalamide units (6T), 20-35 wt.-% hexamethyleneisophthalamide units (6I), 3-15 wt.-% hexamethylenedodecanamide units (612) and 0-5 wt.-% units X selected from the following units 66, 68, 69, 610, 6 or a mixture of these units, whereby the sum of the components is 100 wt.-% of the polyamid 6T/6I/612/X,
   - a semicrystalline polyamide 6T/6I/X having 60-75 wt.-% hexamethyleneterephthalamide units (6T), 20-35 wt.-% hexamethyleneisophthalamide units (6I), 5-20 wt.-% units X selected from the following units 66, 68, 69, 610, 612, 6 or a mixture of these units, whereby the sum of the components is 100 wt.-% of the polyamid 6T/6I/X,
   - PA 6T/10T having 10-60 mol% hexamethyleneterephthalamide (6T) and 40-90 mol% decamethyleneterephthalamide (10T) units,
   - PA 6T/10T/6I having 50-90 mol% hexamethyleneterephthalamide units (6T), and 5-45 mol% hexamethyleneterephthalamide units (6I), and 5-45 mol% decamethyleneterephthalamide (10T) units,
   - PA 6T/6I/6 having 60-85 mol% hexamethyleneterephthalamide units (6T), and 15-40 mol% hexamethyleneisophthalamide units (6I), which additionally contains 5-15 wt% caprolactam,
   wherein the partially crystalline polyamide (A) has a melting point of at least 280 °C, preferred of 285 to 335 °C, more preferred of 290 to 330 °C, most preferred of 295 to 325 °C, measured according to DIN EN ISO 11357-3:2013-04,
(B) 2.0 to 10 % by weight of at least one polyamide different from component (A)
(C) 20 to 55 % by weight of at least one fibrous reinforcing agent,
(D) 0.3 to 2.0 % by weight of nigrosine,
(E) 0.1 to 3.0% by weight of at least one heat stabilizer,
(F) 0 to 10 % by weight of a at least one additive, different from components (A) - (E),
whereby the entirety of components (A) to (F) add up to 100 % by weight.

Moreover, the present invention refers to a moulded article producible from this polyamide moulding composition by extrusion, extrusion blow moulding or injection moulding, especially by gas or liquid assisted injection moulding processes.

The assisted injection moulding technologies include the injection of an inert gas (e.g. nitrogen, carbon dioxide) or a liquid such as water at high pressure into plastic in an injection mould. This cores out sections of the part, leaving hollow areas. These allows to mould hollow or partly hollow parts, reduce part weight and can provide much better distribution of packing pressure and eliminate sink marks. Gas can also be applied to the surface of a plastic part to replace moulding machine packing pressure with a uniform gas packing pressure, eliminating sink marks and reducing clamping force and often leading to lower part weight and cycle time.

With the water assist injection moulding process, water is used to core out the hollow sections, then flows through the part to cool the plastic. Unlike the gas injection process, cooling is provided from the exterior of the part by the tooling and from the interior channel by the water. Direct cooling inside the part is a big advantage of this moulding method because, the thermal conductivity of water is 40 times greater than gas and the heat capacity is four times greater - so cooling cycle times can be reduced to up to 50% that of traditional gas assist.

Polyamide moulded articles are broadly used in the engineering field, in particular for electronic components as well as components in the automotive field. Due to the demand for moulded articles with a reduced weight but a high mechanical strength these articles are in general reinforced by fillers, in particular fibrous fillers and optionally have hollow areas.

Such polyamides moulded articles are also used for articles like housings or covers with integrated connectors, pipes, fittings, intakes or outlets. These can be used in particular in the automotive field e.g. for parts of the air intake system inclusive charger system or for the automotive coolant circuit. For such articles it is important that they show a excellent heat resistance at temperatures above 200°C and /or high hydrolytic resistance at temperatures of 130°C and more which can occur in the surrounding of the engine or the turbo charger.

EP 0 052 944 refers to aliphatic polyamide moulding resins that contain carbon black and nigrosine. The carbon black acts to block or absorb ultraviolet rays and therefore can be used to improve weathering resistance. However, impact resistance and elongation are adversely affected by incorporation of carbon black. It was found that when nigrosine is employed with carbon black in a blend with a polyamide moulding resin, the resulting moulding blend produces moulded articles having better impact resistance and greater elongation than a resin comprising carbon black and polyamide alone.

EP 1 265 962 describes a use of thermoplastic moulding compositions consisting of preferably aliphatic polyamide, glass fibers and of mica or other lamellar mineral reinforcing materials as antinucleating additives for the production of mouldings for the automotive coolant circuit by means of a gas-assisted injection moulding process, wherein the standard GAIM process (melt inflation method) or the melt expulsion method or a combination of inflation and expulsion methods is used.

US 6,265,081 propose the use of nigrosine to improve the weld line strength of integrally moulded articles, manufactured by glass fiber reinforced aliphatic resins, like PA 6 or PA 6/66.

US2013/338261 A1 describes a thermoplastic melt-mixed composition including: a) a polyamide resin; b) 0.50 to about 5.0 weight percent of one or more amino acid selected from the group consisting of primary amino acids and secondary amino acids; said amino acids having no hydroxyl groups and no more than one carboxylic add; optionally, c) one or more polyepoxy compound including at least two or more epoxy groups; d) reinforcing agent; e) polymeric toughener; and f) further additives; wherein the weight percents of components a), b), c) d) e) and f) are based on the total weight of the thermoplastic melt-mixed composition. Also disclosed are processes for making the compositions.

US 2013/281589 A1 discloses a thermoplastic polyamide composition including a) a polyamide resin; b) one or more polyhydric alcohols; c) one or more anti-whitening agents selected from the group consisting of poly(ethylene glycol), poly(ethylene glycol) diesters, poly(propylene glycol), poly(propylene glycol) diesters; and styrene-isoprene-styrene block copolymers; and mixtures of these; d) a lubricant; e) one or more reinforcement agents; and, optionally, f) a polymeric toughener comprising a reactive functional group and/or a metal salt of a carboxylic acid.

WO 2015/166896 A1 discloses a semi-aromatic polyamide resin composition including 100 parts by mass of a semi-aromatic polyamide (A), 20 to 110 parts by mass of a fibrous reinforcing material (B) and 0.1 to 5 parts by mass of an azine dye (C), wherein the semi-aromatic polyamide (A) includes as the constituent components thereof an aromatic dicarboxylic acid component, an aliphatic diamine component and a monocarboxylic acid component, and has a melting point of 300°C or higher; and the monocarboxylic acid component constituting the semi-aromatic polyamide (A) is an aliphatic monocarboxylic acid having a molecular weight of 200 or more.

JP 2014/177560 A provides a polyamide resin composition capable for providing a blow molded article little in variation of wall surface thickness, excellent in surface smoothness of a blow part inside and mechanical strength in a short molding cycle by a liquid assist molding method containing 100 pts.wt. of a polyamide resin (A), 10 to 100 pts.wt. of a fibrous inorganic filler (B), 1 to 30 pts.wt. of non-fibrous inorganic filler (C) and 0.1 to 4.0 pts.wt. of crystallization inhibitor (D).

However, a still not-solved drawback of the fiber reinforced polyamide moulding compositions mentioned above is, that the surface moulded articles, formed from these compositions, is not fully smooth. This is mainly due to the fact that the fibers, being present in the polyamide moulding composition, are not fully covered with the polyamide at the surface so that fibers are not completely incorporated into the moulded compound. Accordingly, in use of the moulded compounds, e.g. under mechanical stress or when in contact with fluids such as e.g. fuel compositions, fibers can release from the surface of the moulded compound and spread in the surrounding, e.g. can wash out into a fuel composition. This phenomenon is not only deterious as far as the remaining mechanical strength of the polyamide moulding compound is concerned, but also unwanted, especially where the fiber reinforced moulded article is in contact with fluids, such as e.g. fuel compositions or coolants.

In addition, the above mentioned polyamide moulding compositions cannot provide the required heat and hydrolytic resistance in order to resist the demanding environments near the engine or in contact with hot coolant medium and the proposed lamellar mineral as antinucleating agent provokes a significant void formation using the assist injection moulding processes.

It was therefore the object of the present invention to provide polyamide moulding compositions with excellent heat resistance, good hydrolytic resistance, in particular in contact to coolant medium and excellant mechanical and thermal properties, in particular with a high tensile strength and a high deflection temperature under load and having excellent processability in gas or liquid (e.g. water) assist injection moulding. The moulded articles produced from these compositions should exhibit a smooth surface, in particular a smooth inner surface in case the articles are hollow. Furthermore articles produced by gas or liquid assist injection moulding processes show a significantly reduced void formation, improving the performance of such articles or enables a reduced wall thickness.

This problem is solved by the polyamide moulding composition according to claim 1 a method of producing a moulded article according to claim 16 as well as the moulded article with the features of claim 17. The dependent claims show preferred embodiments.

The present invention provides a polyamide moulding composition which consists of the following components:
(A) 30 to 79.7 % by weight, preferably 30 to 77.6 % by weight of at least one partially crystalline polyamide consisting of at least one diamine and at least one aromatic dicarboxylic acid, whereupon the at least one diamine has 4 to 20 carbon atoms and is selected from a group of diamines consisting of linear aliphatic diamines, branched aliphatic diamines, cycloaliphatic diamines and araliphatic diamines, wherein said at least one partially crystalline polyamide is selected from the group consisting of
   - PA 6T/6, PA 6T/610, PA 6T/612, PA 6T/10I, PA 6T/12T,
   - PA 6T/6I having 50-80 mol% hexamethyleneterephthalamide units and 20-50 mol% hexamethyleneisophthalamide units,
   - a semicrystalline polyamide 6T/6I/612/X having 60-75 wt.-% hexamethyleneterephthalamide units (6T), 20-35 wt.-% hexamethyleneisophthalamide units (6I), 3-15 wt.-% hexamethylenedodecanamide units (612) and 0-5 wt.-% units X selected from the following units 66, 68, 69, 610, 6 or a mixture of these units, whereby the sum of the components is 100 wt.-% of the polyamid 6T/6I/612/X,
   - a semicrystalline polyamide 6T/6I/X having 60-75 wt.-% hexamethyleneterephthalamide units (6T), 20-35 wt.-% hexamethyleneisophthalamide units (6I), 5-20 wt.-% units X selected from the following units 66, 68, 69, 610, 612, 6 or a mixture of these units, whereby the sum of the components is 100 wt.-% of the polyamid 6T/6I/X,
   - PA 6T/10T having 10-60 mol% hexamethyleneterephthalamide (6T) and 40-90 mol% decamethyleneterephthalamide (10T) units,
   - PA 6T/10T/6I having 50-90 mol% hexamethyleneterephthalamide units (6T), and 5-45 mol% hexamethyleneterephthalamide units (6I), and 5-45 mol% decamethyleneterephthalamide (10T) units,
   - PA 6T/6I/6 having 60-85 mol% hexamethyleneterephthalamide units (6T), and 15-40 mol% hexamethyleneisophthalamide units (6I), which additionally contains 5-15 wt% caprolactam, wherein the partially crystalline polyamide (A) has a melting point of at least 280 °C, preferred of 285 to 335 °C, more preferred of 290 to 330 °C, most preferred of 295 to 325 °C, measured according to DIN EN ISO 11357-3:2013-04,
(B) 0 to 10 % by weight, preferably 2.0 to 10 % by weigth of at least one polyamide different from component (A),
(C) 20 to 55 % by weight of at least one fibrous reinforcing agent,
(D) 0.2 to 2.0 % by weight, preferably 0.3 to 2.0 % by weight of at least one azine dye, especially at least one nigrosine,
(E) 0.1 to 3.0% by weight of at least one heat stabilizer,
(F) 0 to 10 % by weight of a at least one additive, different from components A to E,
whereby the entirety of components (A) to (F) add up to 100 % by weight.

According to a preferred embodiment of the the invention, the polyamide moulding composition is free of the following nucleating agents (part of component (F)): PA22, minerals, clay minerals, talc, in particular magnesium silicate, kaolin or kaolinite.

The term particulate filler (or non-fibrous inorganic filler) refers to silicates, wollastonite, zeolite, sericite, kaolin, mica, clay minerals, pyrophyllite, bentonite, asbestos, talc, aluminosilicate, aluminium oxide, silicon oxide, metal carboxylate, such as calcium carbonate, magnesium carbonate, dolomite, calcium sulfate and, magnesium hydroxide, calcium hydroxide, and aluminium hydroxide, glass beads, ceramic beads, boron nitride or silicon carbide. These particulate fillers are also a part of componente (F).

According to a further preferred embodiment, the polyamide moulding compositions according to the present invention are completely free of nucleating agents and particulate fillers.

According to the present invention the term "nucleating agents" refers to compounds which accelerate the crystallization and reduce the size of spherulites of the polyamide compounds due to more crystallization sites. Nucleating agents are described and defined in Becker/Braun, Kunststoff-Handbuch 3/4 Polyamide 1998, p.181 and in Kohan, Nylon Plastics Handbook 1995, p.444-446.

According to a further preferred embodiment the polyamide moulding compositions are free from particulate fillers. A particulat filler, as being understood in the present invention, may be described as a non-fibrous solid, usually in finely divided form, whereby single particles have a length-to-diameter ratio of not more than 10:1. Particulate fillers are described and defined in S.T. Peters, Handbook of Composites, Sec. Ed. 1998, Chapter 11.

Azine dyes are commercial products and e.g. described in H. Bernetz, Azine Dyes, Ullmann's Encyclopedia of Industrial Chemistry (DOI 10.1002/14356007. a03_213.pub3). Preferred azine dyes are e.g. nigrosines and indulines, wherein nigrosines are especially preferred. For the purposes of the present invention as far as azine dyes are concerned reference is made to the aforementioned textbook.

Surprisingly it was established by the inventors that the polyamide moulding compositions according to the invention allow the production of high heat and/or hydrolytic resistant hollow or partly hollow parts by using the composition of the present invention showing an improved inner surface quality and none or reduced void formation in the wall of the part. Improved inner surface means that the inner surface, which is formed by direct contact of the gas or liquid (e.g. water) injected during the assist injection moulding process, is smoother and has a reduced roughness and the incorporated fibers are covered by the polyamide matrix, so that glass fiber debonding is significantly reduced or prevented.

Surface roughness, often shortened to roughness, is a measure of the texture of a surface. It is quantified by the vertical deviations of a real surface from its ideal form. If these deviations are large, the surface is rough; if they are small the surface is smooth. Most common parameters to characterize the mean roughness are the values Ra and Rz. Ra is the arithmetic average of the roughness profile (line) and describes the roughness or finish of a technical surface. To determine Ra the surface of a defined measured section is scanned and each difference in height and depth of the rough surface is recorded. After calculating the definite integral of the roughness profile the result is divided by the length of the measured section. The roughness value Ra spreads from 25 µm for very rough surfaces with noticeable grooves (scratches) to the point of 0.1 µm for surfaces without an observable unevenness. The mean roughness depth Rz is calculated by measuring the vertical distance from the highest peak to the lowest valley within five sampling lengths (Rzi), then averaging these distances. Rz averages only the five highest peaks and the five deepest valleys therefore extremes have a much greater influence on the final value. The roughness measurement was performed on samples according to DIN EN ISO 4287 (2010-07) by using a Mahrsurf XR1 Surface Measuring Station.

In a preferred embodiment, the moulding composition has
- good heat resistance, and/or
- good hydrolytic resistance against a mixture of LLC (Long Life Coolant) and water (1:1), i.e. tensile strength and/or impact strength (Izod) at - 40 °C after 504/1008 hours storage in glycol/water mixture (1:1) at 140°C is at least 80 MPa and/or at least 90 J/m; preferably elongation at break is after this storage at least 1.5 %, and/or
- a deflection temperature under load (HDT (A), 1.80 MPa) according to DIN EN ISO 75-1:2013-04 and 75-2:2013-04 of at least 250°C, preferably of at least 260 °C, and more preferably of at least 270 °C.

In the following preferred embodiments of the essential components of the polyamide moulding composition according to the invention will be discussed in greater detail.

### Polyamide (A)

In a preferred embodiment, the moulding composition comprises the partially crystalline polyamide (A) in an amount of 30.0 to 73.6% by weight, preferably 32.5 to 72.5 % by weight, more preferably 41.5 to 68.4 % by weight, more preferably 43.0 to 66.75 % by weight.

The partially crystalline polyamide (A) has a melting point of at least 280 °C, preferred of 285 to 335 °C, more preferred of 290 to 330 °C, most preferred of 295 to 325 °C, measured according to DIN EN ISO 11357-3 (2013-04) with a heating rate of 20 K/min.

In an especially preferred embodiment, component A is free of a lactam or aminocarboxylic acid and additionally free of a cycloaliphatic or an araliphatic diamines.

Regulators to control the molecular weight, relative viscosity or flowability or MVR (melt volume flow rate) in the form of monocarboxylic acids or monoamines can be added to the batch and/or the precondensate (before the postcondensation). Aliphatic, cycloaliphatic or aromatic monocarboxylic acids or monoamines that are suitable as regulators are acetic acid, propionic acid, butyric acid, valeric acid, caproic acid, lauric acid, stearic acid, 2-ethylhexanoic acid, cyclohexanoic acid, benzoic acid, 3-(3,5-di-tert-butyl-4-hydroxyphenyl)propanoic acid, 3,5-di-tert-butyl-4-hydroxybenzoic acid, 3-(3-tett-butyl-4-hydroxy-5-methylphenyl)propanoic acid, 2-(3 ,5-di-tert-butyl-4-hy-droxybenzylthio )acetic acid, 3,3-bis(3-tert-butyl-4-hydroxyphenyl)butanoic acid, butylamine, pentylamine, hexylamine, 2-ethylhexylamine, n-octylamine, n-dodecylamine, n-tetradecylamine, n-hexadecylamine, stearylamine, cyclohexylamine, 3-( cyclohexylamino)propylamine, methylcyclohexylamine, dime-thylcyclohexylamine, benzylamine, 2-phenylethylamine, 2,2,6,6-tetra-methylpiperidin-4-amine, 1,2,2,6,6-pentamethylpiperidin-4-amine, 4-amino-2,6-di-tett-butylphenol, among others. Especially preferred are acetic acid, benzoic acid and stearic acid. The concentration of the monofunctional regulators is 0.5 to 0 5 mol-%, preferably 1.0 to 2.5 mol-%, related to the total content of all diamines in case the regulator is a monocarboxylic acids and is 0.5 to 0 5 mol-%, preferably 1.0 to 2.5 mol-%, related to the total content of all dicarboxylic acids in case the regulator is a monoamine.

The regulators can be used individually or in a combination. Other monofunctional compounds that can react with an amino or acid group such as anhydrides, isocyanates, acid halides or esters, can also be used as regulators. The usual amount of regulators is between 10 and 200 mmol per kg of polymer.

The semiaromatic copolyamides (A) can be prepared by substantially known methods. Suitable methods have been described elsewhere, and some of the possible methods that have been discussed in the patent literature will be given below. Suitable methods with regard to the method for preparation of the copolyamide of component (A) have been discussed here: DE-A-195 13 940, EP-A-0 976 774, EP-A-0 129 195, EP-A-0 129 196, EP-A-0 299 444, US 4,831,106, US 4,607,073, DE-A-14 95 393 and US 3,454,536.

Specific representatives of the polyamides (A) in accordance with the invention are: PA 6T/6, PA 6T/6I, PA 6T/6I/6, PA 6T/6I/66, PA 6T/6I/610, PA 6T/6I/612, 6T/610, 6T/612, PA 6T/10I, PA 6T/12T, PA 6T/10T/6I, PA 6T/6I/6, PA 6T/6I/12, and mixtures thereof.

Further in accordance with the invention the following semiaromatic copolyamides are especially preferred as high-melting polyamides (A):
- a semicrystalline polyamide 6T/6I having 50-80 mol%, preferably 57-73 mol%, more preferably 62-72 mol% hexamethyleneterephthalamide units and 20-50 mol%, preferably 27-43 mol%, more preferably 28-38 mol% hexamethyleneisophthalamide units;
- a semicrystalline polyamide 6T/66 having 50-65 mol%, preferably 52-62 mol%, more preferably 53-58, especially preferably 54-57 mol% hexamethyleneterephthalamide units and 35-50 mol%, preferably 38-48, more preferably 42-47, especially preferably 43-46 mol% hexamethyleneadipamide units;
- a semicrystalline polyamide 6T/6I/612/X having 60-75 wt.-% hexamethyleneterephthalamide units (6T), 20-35 wt.-% hexamethyleneisophthalamide units (6I), 3-15 wt.-% hexamethylenedodecanamide units (612) and 0-5 wt.-% units X selected from the following units 66, 68, 69, 610, 6 or a mixture of these units, whereby the sum of the components is 100 wt.-% of the polyamid 6T/6I/612/X;
- a semicrystalline polyamide 6T/6I/X having 60-75 wt.-% hexamethyleneterephthalamide units (6T), 20-35 wt.-% hexamethyleneisophthalamide units (6I), 5-20 wt.-% units X selected from the following units 66, 68, 69, 610, 612, 6 or a mixture of these units, whereby the sum of the components is 100 wt.-% of the polyamid 6T/6I/X.
- a semicrystalline polyamide 6T/10T having 10-60 mol%, preferably 10-40 mol%, hexamethyleneterephthalamide (6T) and 40-90 mol%, preferably 60-90 mol% decamethyleneterephthalamide (10T) units;
- a semicrystalline polyamide 6T/10T/6I having 50-90 mol%, preferably 50-70 mol%, hexamethyleneterephthalamide units (6T), and 5-45 mol%, preferably 10-30 mol%, hexamethyleneterephthalamide units (6I), and 5-45 mol%, preferably 20-40 mol% decamethyleneterephthalamide (10T) units;
- a semicrystalline polyamide 6T/6I/6 having 60-85 mol% hexamethyleneterephthalamide units (6T), and 15-40 mol% hexamethyleneisophthalamide units (6I), which additionally contains 5-15 wt.-% caprolactam.

The semiaromatic, semicrystalline polyamide (A) has a solution viscosity ηᵣₑₗ measured according to DIN EN ISO 307:2013-08 on solutions of 0.5 g polymer in 100 mL m-cresol at a temperature of 20°C, of a maximum of 2.60, preferably a maximum of 2.3, especially a maximum of 2.0. Polyamides (A) having a solution viscosity ηᵣₑₗ in the range from 1.4-2.3, further preferred in the range from 1.45-2.00, further preferred in the range from 1.50-1.90 and especially from 1.55 to 1.85.

The polyamides (A) in accordance with the invention can be prepared in conventional polycondensation equipment via the process sequence precondensate and postcondensation. The described chain length regulators are preferably used for the polycondensation to regulate the viscosity. In addition, the viscosity can be established through the use of an excess of diamine or diacid.

Especially the partially crystalline polyamide 6T/6I (70:30) is made from hexamethylenediamine as the only diamine, terephthalic acid and isophthalic acid in a molar ratio of 70:30. The melting point of this partially crystalline polyamide is 325 °C.

The partially crystalline polyamide 10T/6T is made from decanediamine, hexamethylenediamine and terephthalic acid whereby the a molar ratio of decanediamine to hexamethylenediamine is in the range of 95-40 : 5-60, in particular 90-75 : 10-25.

The partially crystalline polyamide 10T/6T/10I/6I, is made from decanediamine, hexamethylenediamine, terephthalic acid and isophthalic acid with an amount of decanediamine of 7.5 to 20 mol-%, an amount of hexamethylenediamine of 30 to 42.5 mol-%, an amount of terephthalic acid of 36 to 49.15 mol-% and an amount of isophthalic acid of 0.85 to 14 mol-%, whereas the amounts of the four monomers add up to 100 mol-% and the amounts of the diamines add up to 50 mol-% and the amounts of the dicarboxylic acids add up to 50 mol-%.

The partially crystalline polyamide 6T/6I/612 is made from 60 - 75 wt.-% 6T-units, composed by 1,6-hexanediamine and terephthalic acid, 20 - 35 wt.-% 6I-units, composed by 1,6-Hexandiamin and isophthalic acid, and 3 - 15 wt.-% 612-units, composed by 1,6-hexanediamine und dodecandioic acid.

It is to be noted that the term "polyamide" is a generic term, which comprises both homopolyamides and copolyamides. The abbreviated polyamide nomenclature conforms to the norm ISO 16396-1 (2015-04). The diamine 2-methyl-1,5-pentanediamine is abbreviated as MPMD. The diamine 2-methyl-1,8-octanediamine is abbreviated as MOD.

### Component (B) - Second Polyamide

The inventive moulding compositions comprise, as component (B), from 0 to 10% by weight, preferably 1.0 to 10 % by weight, more preferably from 2.0 to 10 % by weight, more preferably from 2.0 to 7.0 % by weight, more preferably from 2.0 to 6.0 % by weight, and in particular from 2.5 to 6.0 % by weight, of a polyamide different from component (A).

Polyamide (B) preferably is selected from the group consisting of partially crystalline polyamides (B1), based on aliphatic or araliphatic diamines and aliphatic dicarboxylic acids, and amorphous polyamides (B2), based on cycloaliphatic or aromatic dicarboxylic acids or on cycloaliphatic or aromatic diamines.

Polyamide (B1) is preferably selected from the group consisting of PA 46, PA 56, PA 6, PA 66, PA 6/66, PA 69, PA 610, PA 612, PA 614, PA 1010, PA 1012, PA 1014, PA 1212, PA 11, PA 12, PA 6/12, PA MXD6, PA MXD10 and also copolymers and mixtures thereof. In particular polyamide (B1) is PA 6, PA 66 or PA 6/12 and also copolymers and mixtures thereof. Polyamides of component (B1) are characterized in that the melting enthalpy determined according to DIN EN ISO 11357-3 (2013) with a heating rate of 20 K/min is at least 20 J/g, perferably in the range of 20 to 70 J/g.

Polyamide (B2) is preferably selected from the group consisting of PA 5I, PA 6I, PA DI (D=2-methyl-1,5-pentandiamine), PA 5I/5T, PA DI/DT, PA 6T/6I, PA5I/5T/6I/6T, PA 5I/5T/DI/DT, PA6I/6T/DI/DT, PA 6I/10I, PA 10I/10T, PA MXDI, MXD6/MXDI, PA MACM10, PA MACM12, PA MACM14 and also copolymers and mixtures thereof. In particular PA 5I/5T, PA DI/DT or PA 6T/6I are preferably used as polyamide (B2). In case that the polyamide (B) is derived from isophthalic and terephthalic acid, it is preferred that the molar ratio of isophthalic acid : terephthalic acid is 51 to 100 : 49 to 0 (mol-%), most preferred 60 to 80 : 40 to 20 (mol-%), whereby a ratio of I/(I+T) = 100 mol-% means, that in the considered polyamide (B2) exclusively isophthalic acid is used. Polyamides (B2) are characterized in that the melting enthalpy determined according to DIN EN ISO 11357-3 (2013) with a heating rate of 20 K/min is less than 8 J/g, perferalbly less than 5 J/g.

Polyamide (B) preferably has a solution viscosity ηᵣₑₗ measured according to DIN EN ISO 307:2013-08 on solutions of 0.5 g polymer in 100 mL m-cresol at a temperature of 20°C, of a maximum of 2.7, preferably a maximum of 2.3, especially a maximum of 2.0. Polyamides (B) having a solution viscosity ηᵣₑₗ in the range from 1.5 to 2.3, especially in the range from 1.6 -2.0 are preferably preferred.

### Component (C) - Fibers

The fiber reinforcing agent (component (C)) is preferably comprised in an amount of 25 to 50 % by weight, more preferably in an amount of 30 to 45 % by weight.

According to another preferred embodiment of the proposed polyamide moulding compound, reinforcing agents of component (C) are fibers, in particular glass and/or carbon fibers, where short fibers, preferably with a length in the range of 2-50 mm and/or endless fibers (rovings), each with a diameter of 5 - 40 microns, are preferably used and where in particular fibers having a circular and/or noncircular cross section are used, where in the latter case the cross-sectional aspect ratio (long axis of cross section to secondary axis) is in particular > 2.

Glass fibers having a noncircular cross section and a cross-sectional aspect ratio greater than 2, preferably 3-8, especially 3-5, are preferably used. These so-called flat glass fibers have an oval, elliptical, elliptical with constrictions (so-called "cocoon" [or "peanut"] fiber), rectangular, or nearly rectangular cross-sectional area.

The flat glass fibers in accordance with the invention that have a noncircular cross-sectional area are preferably used as short glass fibers (chopped strands; cut glass with a length of 0.1-50 mm, preferably 0.2-20 mm, more preferably 2-12 mm).

Another preferred characteristic of the flat glass fibers that are used is that the length of the main (long) cross-sectional axis lies preferably in the range of 6-40 microns, especially in the range of 15-30 microns, and the length of the secondary cross-sectional axis lies in the range of 3-20 microns, especially in the range of 4-10 microns. Mixtures of glass fibers with circular and noncircular cross sections can also be used to strengthen the moulding compounds in accordance with the invention, where the amount of flat glass fibers as defined above is preferably predominant, i.e., more than 50 wt.-% of the total weight of the fibers.

Especially preferred are the so-called flat glass fibers with a cross-sectional aspect ratio of 3-5. In particular, E glass fibers are used in accordance with the invention. However, all other types of glass fibers such as A, C, D, M, S and R glass fibers or any mixtures thereof or mixtures with E glass fibers can be used.

In the case of moulding compounds reinforced with endless fibers having circular cross-section (rovings), higher toughness result and thus properties that are still more metal-like properties result if, instead of the conventional endless glass fibers having diameters of 15-19 microns, ones with diameters of 10-14 microns, especially ones with diameters of 10-12 microns are used.

The polyamide moulding compounds in accordance with the invention can be prepared by the known methods for preparation of long fiber-reinforced rod-shaped pellets, in particular by pultrusion processes, in which the endless fiberstrand (roving) is thoroughly soaked with the polymer melt and then chilled and chopped.

The long fiber-reinforced rod-shaped pellets obtained in this way, which preferably have a pellet length of 3-25 mm, especially 4-12 mm, can be further processed into moulded objects using the conventional processing methods such as injection moulding or pressing.

The endless carbon fibers used in the pultrusion process have a diameter of 5-10 microns, preferably 6-8 microns. To improve matrix binding and fiber handling, the fibers can be coated with chemically different layers, as are known in the prior art for glass and carbon fibers.

The glass fibers themselves, independent of the shape of the cross-sectional surface and length of the fibers, can be chosen from the group consisting of E glass fibers, A glass fibers, C glass fibers, D glass fibers, M glass fibers, S glass fibers, and/or R glass fibers, where E glass fibers are preferred.

### Component (D) - Azine dye

The inventive moulding compositions comprise, as component (D), from 0.2 to 2.0 % by weight, preferably from 0.3 to 2.0 % by weight, preferably from 0.3 to 1.5 % by weight, preferably from 0.3 to 1.0 % by weight, and in particular from 0.35 to 1.0 % by weight, of an azine dye, especially nigrosine.

Nigrosines are generally a group of blue, black or gray phenazine dyes (azine dyes) related to the indulines and taking various forms (water-soluble, oleosoluble, spirit-soluble), used in wool dyeing and wool printing, in black dyeing of silks, and in the coloring of leather, of shoe creams, of varnishes, of plastics, of stoving lacquers, of inks, and the like, and also as microscopy dyes.

Synthesis of the nigrosine dye can be achieved by, for example, oxidizing and dehydrate-condensing aniline, aniline hydrochloride and nitrobenzene by heating them in the presence of metallic iron or copper and metal salts like iron chloride (FeCl₃) at a reaction temperature of 160 to 180° C (the name being derived from the Latin niger=black). Nigrosine is produced as a mixture of various different compounds depending on reaction conditions, raw materials charged, charge ratio and the like; for example, it is postulated that nigrosine may be a mixture of various triphenazineoxazines and phenazineazine compounds.

Component (D) can be used in the form of free base or else in the form of salt (e.g. hydrochloride).

As the nigrosine (component (D)) of the present invention, the black azine-series mixture described as C.I. Acid Black 2, C.I. SOLVENT BLACK 5, C.I. SOLVENT BLACK 5:1, C.I. SOLVENT BLACK 5:2 and C.I. SOLVENT BLACK 7 in the COLOR INDEX can be suitably used (in this specification, C.I. Generic Names are described according to the third edition of the COLOUR INDEX).

Examples of commercially available nigrosine dyes include Spirit Black SB, Spirit Black SSBB, Spirit Black AB (all are categorized under C.I. SOLVENT BLACK 5); Nigrosine Base SA, Nigrosine Base SAP, Nigrosine Base SAP-L, Nigrosine Base EE, Nigrosine Base EE-L, Nigrosine Base EX, Nigrosine Base EX-BP (all are categorized under C.I. SOLVENT BLACK 7) and the like [all are products by Orient Chemical Industries, Ltd.].

It is preferably used C. I. SOLVENT BLACK 7 (CAS No 8005-02-5).

A volume average particle size Dv50 (or X50) according to ISO 13320:2009 of nigrosine as component (D) is preferably ranging from 5 to 20 microns, and it is furthermore preferably ranging from 5 to 15 microns. When the above nigrosine is used in the present invention, the assist injection moulding procedure is easily performed and hollow articles with reduced roughness of the inner surface are prepared.

In particular nigrosine can be introduced into the inventive moulding composition as masterbatch or concentrate, preferably on base of polyamides (B), preferably polyamides (B1) whereby the content of nigrosine is preferably in the range of 20 to 40 wt.-%. As base of these masterbatches the aliphatic polyamides PA6, PA66, PA6/12 or mixtures thereof are preferred.

Concentration of iron in nigrosine is for example less than 1 weight %, preferably less than 0.5 weight %, furthermore preferably less than 0.4 weight %. This improves dispersibility or compatibility of nigrosine as color for the resin and therefore the quality of assisted injection moulded articles made from the resin.

Concentration of aniline in nigrosine is for example less than 1 weight %, preferably less than 0.5 weight %, furthermore preferably not more than 0.4 weight %.

### Component (E) - Heat stabilizer

The thermoplastic moulding compounds in accordance with the invention contain as component (E), 0.1-3.0 wt.-%, preferably 0.2-2.0 wt.-%, especially preferably 0.2-1.5 wt.-%, especially preferred 0.3 to 1.0 wt.-% of at least one heat stabilizer or thermostabilizer which preferably is selected from the group consisting of compounds of mono- or divalent copper, stabilizers based on secondary aromatic amines, stabilizers based on sterically hindered phenols, phosphites, phosphonites, metal salts or metal oxides, whereby in particular the metal is copper and mixtures of the above-mentioned stabilizers.

In a preferred embodiment the thermal stabilizers (component (E)) are chosen from the group consisting of
- compounds of mono- and divalent copper, for example salts of mono- or divalent copper with inorganic or organic acids or a mono- or dihydric phenol, the oxides of mono- or divalent copper, or the complex compounds of copper salts with ammonia, amines, amides, lactams, cyanides or phosphines, preferably Cu(I) or Cu(II) salts of the halohydric acids, cyanohydric acids or the copper salts of aliphatic carboxylic acids. The monovalent copper compounds CuCl, CuBr, Cul, CuCN and Cu₂O, as well as the divalent copper compounds CuCl₂, CuSO₄, CuO, copper(II) acetate or copper(II) stearate are especially preferred. The copper compound can be used as such as or in the form of concentrates. A concentrate is understood to mean a polymer, preferably of the same chemical nature as component (A) or (B), that contains the copper salt in a high concentration. The copper compounds are advantageously used in combination with other metal halides, especially alkali halides like Nal, KI, NaBr, KBr, where the mole ratio of metal halide to copper halide is 0.5-20, preferably 1-10, and especially preferably 3-7;
- stabilizers based on secondary aromatic amines;
- stabilizers based on sterically hindered phenols; and
- metal salts or metal oxides, especially originating from transition metals, whereby iron salts or iron oxides are preferred, and
- phosphites and phosphonites; and also
- mixtures of the stabilizers indicated above.

Especially preferred examples of stabilizers based on secondary aromatic amines that can be used in accordance with the invention are adducts of phenylenediamine with acetone (Naugard A), adducts of phenylenediamine with linolene, Naugard 445, N,N'-dinaphthyl-p-phenylenediamine, N-phenyl-N'-cyclohexyl-p-phenylenediamine or mixtures of two or more thereof.

Preferred examples of stabilizers based on sterically hindered phenols that can be used in accordance with the invention are N,N'-hexamethylenebis-3-(3,5-di-tert-butyl-4-hydroxyphenyl)propionamide, bis(3,3-bis(4'-hydroxy-3'-tert-butylphenyl)butanoic acid) glycol ester, 2,1'-thioethylbis-(3-(3,5-di-tert-butyl-4-hydroxyphenyl)propionate, 4,4'-butylidenebis(3-methyl-6-tert-butylphenol), triethylene glycol-3-(3-tert-butyl-4-hydroxy-5-methylphenyl)propionate, or mixtures of two or more of these stabilizers.

Preferred phosphites and phosphonites are triphenyl phosphite, diphenylalkyl phosphite, phenyl dialkyl phosphite, tris(nonylphenyl)phosphite, trilauryl phosphite, trioctadecyl phosphite distearylpentaerythritol diphosphite, tris(2,4-di-tert-butylphenyl) phosphite, diisodecylpentaerythritol diphosphite, bis(2,4-di-tert-butylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl))pentaerythritol diphosphite, tristearyl sorbitol triphosphite, tetrakis(2,4-di-tert-butylphenyl)-4,4'-biphenylene diphosphonite, 6-isooctyloxy-2,4,8,10-tetra-tert-butyl-12H-dibenz[d,g]-1,3,2-dioxaphos-phocine, 6-fluoro-2,4,8,10-tetra-tert-butyl-12-methyldibenz[d,g]-1,3,2-dioxa-phosphocine, bis(2,4-di-tert-butyl-6-methylphenyl)methyl phosphite and bis(2,4-di-tert-butyl-6-methylphenyl)ethyl phosphite. Especially preferred are tris[2-tert-butyl-4-thio-(2'-methyl-4'-hydroxy-5'-tertbutyl)phenyl-5- methyl) phenyl phosphite and tris(2,4-di-tert-butylphenyl)phosphite (Hostanox^{®} PAR24, commercial product of Clariant, Basel).

An especially preferred embodiment of the thermostabilizer consists of the combination of organic heat stabilizers (in particular, Hostanox PAR 24 and Ir-ganox 1010), a bisphenol A-based epoxide (in particular, Epikote 1001), and a copper stabilizer based on CuI (copper iodide) and KI (potassium iodide). Thermal stabilization exclusively on the basis of CuI and KI is especially preferred.

Besides the addition of organic heat stabilizers and/or copper or copper compounds, the use of other transition metal compounds, especially metal salts or metal oxides of groups VB, VIIB, VIIB or VIIIB of the periodic table, is preferably excluded. Moreover, preferably no transition metals of the groups VB, VIIB, VIIB or VIIIB of the periodic table such as iron or steel powders, are added to the moulding compound in accordance with the invention.

### Component (F) - (Additives, different from components A to E)

It is further preferred that the moulding composition comprises 0 - 10 % by weight of at least one additive, different to any of the components A to E, which is selected from the group consisting of UV- and light-stabilisers, lubricants, coloring- and marking materials, inorganic pigments, organic pigments, IR absorbers, antistatic agents, antiblocking agents, crystal-growth inhibitors, condensation catalysts, chain extenders, defoamers, chain-lengthening additives, conductivity additives, carbon black, graphite, carbon nanotubes, mould-release agents, separating agents, flame retardants, non-halogen-containing flame retardants, anti-dripping-agents, impact modifiers, optical brighteners, photochromic additives, metallic pigments, nucleating agents, like PA22, minerals, clay minerals, talc, in particular magnesium silicate, kaolin or kaolinite and particulate fillers like silicates, wollastonite, zeolite, sericite, kaolin, mica, clay minerals, pyrophyllite, bentonite, asbestos, talc, aluminosilicate, aluminium oxide, silicon oxide, metal carboxylate, such as calcium carbonate, magnesium carbonate, dolomite, calcium sulfate and, magnesium hydroxide, calcium hydroxide, and aluminium hydroxide, glass beads, ceramic beads, boron nitride or silicon carbide.

The at least one additive is preferably comprised in an amount of 0 to 7.0 % by weight, more preferably 0.1 to 4.0 % by weight.

In particular preferred is a polyamide moulding composition which is free of carbon black.

Most preferred is a polyamide moulding composition which consists of the following components:
(A) 36.5 to 72.5 % by weight of a partially crystalline polyamide PA 6T/6I having 62-72 mol% hexamethyleneterephthalamide units and 28-38 mol% hexamethyleneisophthalamide units,
(B) 2.0 to 7.0 % by weight of at least one polyamide different from component (A)
(C) 25.0 to 50.0 % by weight of at least one fibrous reinforcing agent,
(D) 0.3 to 1.0 % by weight of at least one azine dye, especially at least one nigrosine,
(E) 0.2 to 1.5% by weight of at least one heat stabilizer, preferably on base of mono- or divalent copper compounds in combination with alkali halides
(F) 0 to 4.0 % by weight of a at least one additive, different from components (A) - (E),
whereby the entirety of components (A) to (F) add up to 100 % by weight.

Moreover, the present invention provides a method for the production of a moulded article as well as a moulded article which is producible from the above-described moulding composition. Such moulded article is manufactured by extrusion, extrusion blow moulding or injection moulding, preferably by an assisted injection moulding process, especially gas or liquid assisted injection moulding process, and is preferably partially hollow or hollow.

The present invention also relates to moulded articles which are producible or produced from the polyamide moulding compositions according to the invention. Preferably, these moulded articles are produced by the method according to the invention as described above.

In particular the moulded articles of the present invention includes tubes or tube sections, connectors, fittings, intakes or outlets, housings or covers with integrated connectors, pipes, fittings, intakes or outlets, or pellets. These can be used in particular in the automotive field e.g. for parts of the air intake system, the charger system or for the automotive coolant circuit.

According to a especially preferred embodiment the surface of the moulded articles is very smooth. That is, at least a part of the surface has a roughness measured according to DIN EN ISO 4287 (2010-07) with Ra values of less than 4.2 µm, preferably less than 4 µm, especially preferred less than 4.0 µm and/or Rz values of less than 25 µm, preferably less than 20 µm, especially preferred of less than 18 µm. A part of the surface of the moulded article especially includes the inner surface of a hollow article, e.g. the inner surface of an article which has been produced by means of assisted injection moulding methods.

Surprisingly it could be demonstrated that the articles according to the invention have
- good heat resistance at temperatures above 200°C,
- high hydrolytic resistance at temperatures of 130°C or above (tensile strength determined according to ISO 527 and/or impact strength (Izod) at - 40 °C determined according to ISO 180/A after 504/1008 hours storage in glycol/water mixture (1:1) at 140°C is at least 80 MPa and/or at least 90 J/m; preferably elongation at break determined according to ISO 527 is after this storage at least 1.5 %),
- excellent surface properties (i.e. have a very smooth surface; roughness Ra is less than 4 µm and Rz is less than 20 µm),
- are poor in voids (none or only few very small voids in the wall),
- improved weld line strength and
- good adhesion to metals, especially to aluminium.

Furthermore the inventive moulding compositions show a very good processability and high flow ability, especially regarding to assist injection moulding processes, allowing to produce moulded articles with thinner walls (reduced thickness) and/or a higher aspect ratio (longer parts). Due to the improved inner surface quality hollow moulded articles according to the invention have a reduced friction regarding the medium (fluid) flowing through such an article and show none or a reduced glass fiber debonding from the inner surface during the use.

To produce the polyamide moulding composition the components (A) to (F) were compounded on typical compounding machines, e.g. single- or twin-screw extruders or screw kneaders. The dried component (A), (B), (D), (E) and (F) will be preferably metered via a gravimetric metering scale into the intake. Component (C) can be metered via a gravimetric metering scale into the intake or via a side feeder into the molten component (A). Components (C) and if necessary (D) can be metered separately into the intake or via a side feeder into the molten component (A). Components (A), (B), (D) and (F) can also be metered into the intake in form of dry blends. (D) can also be used in form of a concentrate (masterbatch), preferably on base of polyamides (B), more preferably on base of polyamides (B1).

The compounding is performed at set cylinder temperatures of preferably 70 to 100 °C for the first cylinder and depending on the nature of component (A) 300 to 370 °C for the remaining cylinders. Vacuum can be applied or degassing can be performed to the atmosphere before the nozzle. The melt is extruded in strand form, cooled down in a water bath at 10 to 90 °C and subsequently pelletized. The pellets are dried for 12 to 24 hours at 80 to 120 °C under nitrogen or in vacuum to a water content of less than 0.1 wt.-%.

### Examples

The present invention is described in more detail by the following examples.

The following measuring specifications were used to analyse the polyamides and test the polyamide moulding compounds. If not noted elsewhere the test pieces were analysed dry as moulded.

**Relative Viscosity (RV** or **ηᵣₑₗ**, both terms are interchangeably used):
ISO 307:2013-08
Pellets
0.5 g in 100 ml m-cresol
Temperature 20 °C
Calculation of the relative viscosity according to RV = t / t₀

**Melting Point, Melting Enthalpy (heat of fusion):**
ISO 11357-3:2013-04
Pellets
Differential scanning calometry (DSC) was performed at a heating rate of 20 K/min. For the melting point, the temperature was specified at the peak maximum.

**HDT (Heat Deflection Temperature):**
ISO 75-1:2013-04, ISO 75-2:2013-04
ISO test bar, standard: ISO/CD 3167, type B1, 80 x 10 x 4 mm (flatwise)
HDT A load 1.80 MPa

**Tensile Modulus, Tensile Strength, Elongation at Break:**
ISO 527
ISO tension bar, standard: ISO/CD 3167, type A1, 170 x 20/10 x 4 mm
Testing speed 1 mm/min for Tensile Modulus, 5 mm/min for Tensile Strength and Elongation at Break
Temperature 23 °C

**Charpy Impact Strength:**
ISO 179/eU
ISO test rod, standard: ISO/CD 3167, type BI, 80x10x4 mm, temperature 23° C.

**Charpy Notched Impact Strength:**
ISO 179/eA
ISO test rod, standard: ISO/CD 3167, type BI, 80x10x4 mm, temperature 23° C.

**Izod Impact Strength**
ISO 180 (Method 180/A)
ISO test rod, standard: ISO/CD 3167, type BI, 80x10x4 mm, temperature - 40°C

### Hydrolytic Resistance

Before testing, the test pieces were stored at a temperature of (+23 ± 5) °C for at least 8 h and shall be free from strain during this period. The tests on unaged test pieces (Stress at Break ISO 527-1, Strain at Break ISO 527-1 and Charpy Impact Strength at +23 °C ISO 179-1/ 1eU) were performed on dry as moulded test specimen.

The other test pieces were stored in a mixture of glycol (LLC) and water (1:1) in an autoclav for 504/1008 hours (test time) at 140°C (test temperature). As glycol VW coolant G13 pursuant to VW TL 774 J was used. After test time the test specimens were cooled down in the test medium to (+23 ± 5) °C. Then the test specimens were removed from the test medium, rinsed with water and wiped dry with a cotton cloth. After cleaning the test specimen were stored in a desiccator. Within 7 days (maximum) after the storage in the autoclav the properties Stress at Break ISO 527-1, Strain at Break ISO 527-1 and Charpy Impact Strength at +23 °C ISO 179-1/ 1eU were determined.

### Surface Roughness

The roughness measurement was performed on samples manufactured by assisted injection moulding processes according to DIN EN ISO 4287 (2010-07) by using a Mahrsurf XR1 Surface Measuring Station. Before determining the roughness profil of the inner surface along injection direction, the hollow test samples (tubes) were cut into halves in longitudinal direction of the tubes. The mean roughness depth Rz was calculated by measuring the vertical distance from the highest peak to the lowest valley within five sampling lengths (Rzi), then averaging these distances.

### Production of moulding compositions

The moulding compositions having the compositions in Tables 2 and 3 were produced on a twin-screw extruder from Toshiba Machine Co., Ltd. Modell TEM-37BS. The components A, B and D to F were metered into the feed zone. The glass fibres (C) were metered into the polymer melt by means of a side feeder 3 barrel units upstream of the die. The barrel temperature was set as rising profile up to 340°C for the examples E1 - E8 and comparison examples CE4-CE8 and up to 300°C for the comparison tests CE1-CE3. A throughput of 10 kg/h was achieved at a revolution speed of 120 to 200 rpm. Degassing was performed to the atmosphere before the nozzle. The compounded materials were discharged as strand from a die of diameter 3 mm and pelletized after water cooling. After pelletizing and drying for 24 h at 110°C in vacuum (30 mbar) to a water content of less than 0.1 wt.-%, the properties of the pellets were measured and the test samples were produced.

### Production of test pieces

The test pieces for the tensile test and HDT test were produced on an injection moulding machine by the Arburg Company, Modell Allrounder 420 C 1000-250. For polyamide 6T/6I compounds or polyamide 6T/66 compounds increasing cylinder temperatures from 310 °C to 340 °C were thereby used. The moulding temperature was 130 to 150 °C. For polyamide 66 compounds or polyamide 6 compounds increasing cylinder temperatures from 260 °C to 290 °C were thereby used. The moulding temperature was 70 to 90 °C.

The test bodies were used in a dry state, they were stored for this purpose after the injection moulding for at least 48 h at room temperature in a dry environment, i.e. over silica gel.

The hollow test pieces (25x3x200 mm tube) were produced on an gas or water assisted injection moulding machine Maximator WD/300/1.5/2/U. For polyamide 6T/6I compounds or polyamide 6T/66 compounds increasing cylinder temperatures from 310 °C to 340 °C were thereby used. The melt resin temperature was 330°C and moulding tool temperature was 95 °C or 130 °C. Gas assist: Speed 50 cm³/s at a pressure of 30 bar. Water assist: Speed 100 ml/s at a pressure of 350 bar.

For the preparation of the polyamide moulding compositions the following materials were used (s. Table 1):

**Table 1: Components (A) to (F)**

| **Component** | **Description** | **Trade Name** | **Producer** |
|---|---|---|---|
| PA 6T/6I (A) | polyamide 6T/6I (70/30 mol-%) made of hexamethylendiamine, terephthalic acid and isophthalic acid, RV = 1.56, melting point 325 °C | - | EMS-CHEMIE AG, Switzerland |
| PA 6T/66 (A) | polyamide 6T/66 (55/45 mol-%) made of hexamethylendiamine, terephthalic acid and isophthalic acid, RV = 1.72, melting point 310 °C | - | EMS-CHEMIE AG, Switzerland |
| PA 6 (B) | polyamide 6 made of ε-caproclactam RV = 1.73, melting point 222 °C | 1013B | Ube Industries, Japan |
| PA 66 (B) | polyamide 66 made of hexamethylendiamine and adipic acid, RV = 1.85, melting point 260 °C | Leona 1200 | Asahi Chemical Industry, Japan |
| PA 6/12 (B) | polyamide 6/12 made of ε-caprolactam and laurolactam, RV = 1.80, melting point 190 °C | Grilon CR8 | EMS-CHEMIE AG, Switzerland |
| Nigrosine (D) | C.I. SOLVENT BLACK 7 | Nubian Black TH-807 | Orient Chemical Industires Ltd. |
| CuI (E) | copper (I) iodide, purity at least 98 %, CAS-No. 7681-65-4 | - | Junsei Chemical Co., Ltd, Japan |
| KI (E) | potassium iodide, purity at least 98 %, CAS-No. 7681-11-0 | - | Junsei Chemical Co., Ltd, Japan |
| glass fiber (C) | Chopped glass fibers with a length of 3 mm and a diameter of 10 µm | CS3J-260 | Nitto Boseki Co., Ltd., Japan |

Table 2 and 3 show the analytical results of the inventive and comparative examples.

**Table 2: Examples 1 - 7 according to the invention**

| **Component** | **Unit** | **Examples** | | | | | | |
|---|---|---|---|---|---|---|---|---|
| | | **1** | **2** | **3** | **4** | **5** | **6** | **7** |
| **PA 6T/6I** | wt.-% | 56.0 | 56.0 | 56.0 | 46.0 | 66.0 | 67.2 | |
| **PA 6T/66** | wt.-% | | | | | | | 65.2 |
| **PA 66** | wt.-% | 2.9 | | | | | | |
| **PA 6** | wt.-% | | 2.9 | | | | | |
| **PA 6/12** | wt.-% | | | 2.9 | 2.9 | 2.9 | 2.1 | 3.5 |
| **Glass fibers** | wt.-% | 40.0 | 40.0 | 40.0 | 50.0 | 30.0 | 30.0 | 30.0 |
| **Nigrosine** | wt.-% | 0.8 | 0.8 | 0.8 | 0.8 | 0.8 | 0.4 | 1.0 |
| **CuI** | wt.-% | 0.05 | 0.05 | 0.05 | 0.05 | 0.05 | 0.05 | 0.05 |
| **KI** | wt.-% | 0.25 | 0.25 | 0.25 | 0.25 | 0.25 | 0.25 | 0.25 |

| **Tests** | | | | | | | | |
|---|---|---|---|---|---|---|---|---|
| Tensile modulus | MPa | 13900 | 13800 | 13700 | 17000 | 10700 | 10800 | 10800 |
| Tensile strength | MPa | 210 | 205 | 205 | 235 | 180 | 180 | 176 |
| Elongation at break | % | 2.2 | 2.2 | 2.3 | 2.1 | 2.1 | 2.1 | 2.0 |
| Impact Charpy 23°C | kJ/m² | 75 | 75 | 80 | 85 | 54 | 58 | 45 |
| Notched Impact Charpy 23°C | kJ/m² | 9 | 9 | 10 | 12 | 7 | 8 | 9 |
| HDT A (1.80 MPa) | °C | >280 | >280 | >280 | >280 | >280 | >280 | >280 |
| Tensile Strength 23°C after storage 504h/140°C²⁾ | MPa | 95 | 90 | 100 | 125 | 85 | 83 | 80 |
| Izod Impact -40°C | J/m | 115 | 110 | 115 | 160 | 105 | 101 | 102 |
| Izod Impact -40°C after storage 504h/140°C²⁾ | J/m | 104 | 100 | 107 | 125 | 95 | 90 | 93 |
| Roughness of inner surface Water Assist (Ra/Rz) | µm | 2.8/ 13.5 | 3.1/ 14.3 | 2.9/ 13.9 | 3.4/ 16.0 | 2.2/ 11.9 | 2.5/ 12.3 | 3.5/ 15.1 |
| Roughness of inner surface Gas Assist (Ra/Rz) | µm | 3.2/ 16.1 | 3.3/ 16.5 | 3.4/ 16.9 | 4.0/ 18.4 | 2.9/ 14.0 | 3.2/ 16.0 | 3.8/ 17.5 |
| Void formation¹⁾ | - | 0 | 0 | 0 | 0 | 0 | 1 | 0 |

| | | | | | | | | |
|---|---|---|---|---|---|---|---|---|
| ¹⁾ 0: none voids are observed, 1: few, small voids, 2: serveral large voids are observed ²⁾ 504 h storage in a mixture of LLC (Long Life Coolant) and water (1:1) at 140 °C | | | | | | | | |

**Table 3: Comparative Examples 1-8**

| **Component** | **Unit** | **Comparative Examples** | | | | | | | |
|---|---|---|---|---|---|---|---|---|---|
| | | **1** | **3** | **3** | **4** | **5** | **6** | **7** | **8** |
| PA 6T/6I | wt.-% | | | | 69.7 | 59.7 | | 49.7 | 43.9 |
| PA 6T/66 | | | | | | | 69.7 | | |
| PA 66 | wt.-% | 68.9 | | 55.1 | | | | | |
| PA 6 | wt.-% | | 68.9 | 13.8 | | | | | |
| Glass fibers | wt.-% | 30.0 | 30.0 | 30.0 | 30.0 | 40.0 | 30.0 | 50.0 | 50.0 |
| Nigrosine | wt.-% | 0.8 | 0.8 | 0.8 | - | - | - | - | 0.8 |
| CuI | wt.-% | 0.05 | 0.05 | 0.05 | 0.05 | 0.05 | 0.05 | 0.05 | 0.05 |
| KI | wt.-% | 0.25 | 0.25 | 0.25 | 0.25 | 0.25 | 0.25 | 0.25 | 0.25 |
| Calcium carbonate (Millicarb, Omya) | wt.-% | | | | | | | | 5.0 |

| **Tests** | | | | | | | | | |
|---|---|---|---|---|---|---|---|---|---|
| Tensile modulus 23°C | MPa | 10500 | 9500 | 9700 | 11000 | 14500 | 11100 | 18400 | 18000 |
| Tensile strength 23°C | MPa | 195 | 170 | 190 | 190 | 220 | 190 | 250 | 195 |
| Elongation at break 23°C | % | 3 | 3 | 3 | 2.2 | 2.0 | 2.1 | 1.9 | 1.4 |
| Impact Charpy 23°C | kJ/m² | 60 | 50 | 70 | 50 | 70 | 50 | 80 | 47 |
| Notched Impact Charpy 23°C | kJ/m² | 10 | 10 | 10 | 7 | 8 | 7 | 11 | 7 |
| HDT A (1.80 MPa) | °C | 245 | 201 | 235 | >280 | >280 | >280 | >280 | 278 |
| Tensile Strength 23°C after storage 504h/140°C²⁾ | MPa | 40 | n.m. | 33 | 110 | 130 | 110 | 145 | n.d. |
| Izod Impact -40°C | J/m | n.d. | n.m. | n.d. | 105 | 118 | 98 | 140 | n.d. |
| Izod Impact -40°C after storage 504h/140°C²⁾ | J/m | n.d. | n.m. | n.d. | 85 | 95 | 80 | 92 | n.d. |
| Roughness of inner surface Water Assist (Ra/Rz) | µm | 4.3/ 25.5 | 5.2/ 25.5 | 5.0/ 26.3 | 7.5/ 32.7 | 7.9/ 34.8 | 8.3/ 37.0 | 8.2/ 42.1 | 7.7/ 34.7 |
| Roughness of inner surface Gas Assist (Ra/Rz) | µm | n.d. | n.d. | n.d. | 8.4/ 41.3 | 8.9/ 43.1 | 9.2/ 42.8 | 9.4/ 45.7 | 9.1/ 42.3 |
| Void formation | - | 1 | 1 | 1 | 2 | 2 | 2 | 2 | 2 |

| | | | | | | | | | |
|---|---|---|---|---|---|---|---|---|---|
| ¹⁾ 0: none voids are observed, 1: few, small voids, 2: serveral large voids are observed ²⁾ 504 h storage in a mixture of LLC (Long Life Coolant) and water (1:1) at 140 °C n.d.: not determined; n.m.: not measurable | | | | | | | | | |

**Table 4 - Comparative Examples 9 - 10**

| **Component** | **Unit** | **Comparative Examples** | |
|---|---|---|---|
| | | **9**³⁾ | **10**⁴⁾ |
| PA 66/6T (75/25) | wt.-% | 51.9 | 55.25 |
| PA6 | wt.-% | 5.0 | 5.0 |
| MB Nigrosin | wt.-% | 0.6 | 0.6 |
| MB Carbon Black | wt.-% | 0.6 | 1.0 |
| TRX-301 | wt.-% | 2.5 | |
| TTE | wt.-% | 1.0 | 1.0 |
| 4-Aminobenzoic acid | wt.-% | 3.0 | |
| Lysine-HCl | wt.-% | | 1.75 |
| N-Stearylerucamide | wt.-% | 0.1 | 0.1 |
| CuI | wt.-% | 0.05 | 0.05 |
| KI | wt.-% | 0.25 | 0.25 |
| Glass fibers | wt.-% | 35.0 | 35.0 |

| **Tests** | | | |
|---|---|---|---|
| Tensile modulus 23°C | MPa | 12000 | 12300 |
| Tensile strength 23°C | MPa | 192 | 198 |
| Elongation at break 23°C | % | 4.2 | 3.8 |
| Impact Charpy 23°C | kJ/m² | 48 | 43 |
| Notched Impact Charpy 23°C | kJ/m² | 10 | 10 |
| HDT A (1.80 MPa) | °C | 235 | 240 |
| Tensile Strength 23°C after storage 504h/140°C²⁾ | MPa | 45 | 40 |
| Roughness of inner surface Water Assist (Ra/Rz) | µm | 8.1/ 35.2 | 8.5/ 39.7 |
| Roughness of inner surface Gas Assist (Ra/Rz) | µm | 8.9/42.5 | 9.7/47.1 |
| Void formation | - | 1 | 1 |

| | | | |
|---|---|---|---|
| ¹⁾ 0: none voids are observed, 1: few, small voids, 2: serveral large voids are observed ²⁾ 504 h storage in a mixture of LLC (Long Life Coolant) and water (1:1) at 140 °C ³⁾ Reproduction of Example 21 (table 5B) of US2013/0338261A1 ⁴⁾ Reproduction of example 47 (table 11) of US2013/0338261A1 | | | |

For the comparative examples 9-12 the following compounds were used:

| | |
|---|---|
| MB Nigrosine: | A 40 wt.-% Nigrosine (Nubian Black TH-807) concentrate in a PA66 (Leona 1200) carrier |
| MB Carbon Black: | A 25 wt.-% Carbon Black (Black Pearls 880, Cabot) concentrate in a PA6 (UBE nylon 1013B) carrier |
| TRX-301: | MAH-grafted EPDM-Rubber, DuPont |
| TTE: | Trimethylolpropane triglycidyl ether (CAS: 30499-70-8) |

The effect of the invention further is demonstrated in the following figures.

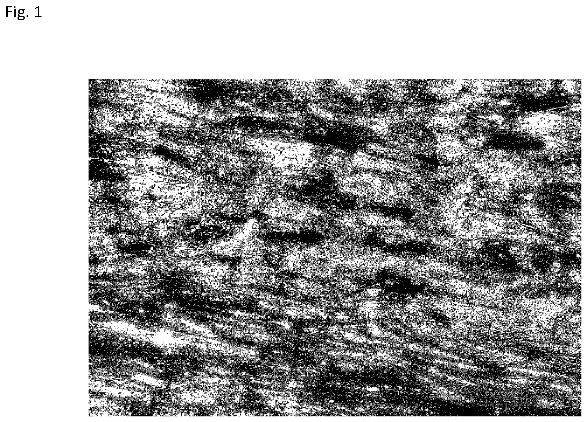

Figure 1 represents the microscope photograph of a surface of a moulded article, formed from a composition of example 8 (tab. 2).

As can be seen from the figure, virtually no glas fibers at all are present at the surface. The surface is fully covered by the polyamide matrix material. Therefore, a high surface smoothness can be realized.

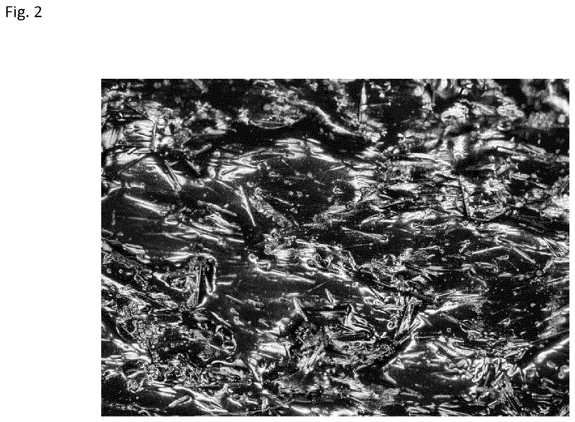

In contrast, Figure 2 shows a microscope photograph of the surface of a reference sample, made from comparative example 4 (tab. 3).

As can be seen, a numerous isolated glass fibers, which are not fully integrated into the polyamide matrix are present at the surface. These more or less exposed glass fibers contribute to the reduced surface smoothness, furthermore, these exposed glass fibers are subject to abrasion or extraction (glass fiber debonding).

In comparison to the inventive examples CEx.9 and 10 are cearly inferior with respect to heat deflection temperature, hydrolytic resistance and quality of the inner surface.

## Claims

1. Polyamide moulding composition consisting of the following components:
(A) 30 to 77.6 % by weight of at least one partially crystalline polyamide consisting of at least one diamine and at least one aromatic dicarboxylic acid, whereupon the at least one diamine has 4 to 20 carbon atoms and is selected from a group of diamines consisting of linear aliphatic diamines, branched aliphatic diamines, cycloaliphatic diamines and araliphatic diamines, wherein said at least one partially crystalline polyamide is selected from the group consisting of
- PA 6T/6, PA 6T/610, PA 6T/612, PA 6T/10I, PA 6T/12T,
- PA 6T/6I having 50-80 mol% hexamethyleneterephthalamide units and 20-50 mol% hexamethyleneisophthalamide units,
- a semicrystalline polyamide 6T/6I/612/X having 60-75 wt.-% hexamethyleneterephthalamide units (6T), 20-35 wt.-% hexamethyleneisophthalamide units (6I), 3-15 wt.-% hexamethylenedodecanamide units (612) and 0-5 wt.-% units X selected from the following units 66, 68, 69, 610, 6 or a mixture of these units, whereby the sum of the components is 100 wt.-% of the polyamid 6T/6I/612/X,
- a semicrystalline polyamide 6T/6I/X having 60-75 wt.-% hexamethyleneterephthalamide units (6T), 20-35 wt.-% hexamethyleneisophthalamide units (6I), 5-20 wt.-% units X selected from the following units 66, 68, 69, 610, 612, 6 or a mixture of these units, whereby the sum of the components is 100 wt.-% of the polyamid 6T/6I/X,
- PA 6T/10T having 10-60 mol% hexamethyleneterephthalamide (6T) and 40-90 mol% decamethyleneterephthalamide (10T) units,
- PA 6T/10T/6I having 50-90 mol% hexamethyleneterephthalamide units (6T), and 5-45 mol% hexamethyleneterephthalamide units (6I), and 5-45 mol% decamethyleneterephthalamide (10T) units,
- PA 6T/6I/6 having 60-85 mol% hexamethyleneterephthalamide units (6T), and 15-40 mol% hexamethyleneisophthalamide units (6I), which additionally contains 5-15 wt% caprolactam,
wherein the partially crystalline polyamide (A) has a melting point of at least 280 °C, preferred of 285 to 335 °C, more preferred of 290 to 330 °C, most preferred of 295 to 325 °C, measured according to DIN EN ISO 11357-3:2013-04,
(B) 2.0 to 10 % by weight of at least one polyamide different from component (A),
(C) 20 to 55 % by weight of at least one fibrous reinforcing agent,
(D) 0.3 to 2.0 % by weight of at least one azine dye,
(E) 0.1 to 3.0% by weight of at least one heat stabilizer,
(F) 0 to 10 % by weight of a at least one additive, different from components (A) - (E),
whereby the entirety of components (A) to (F) add up to 100 % by weight.

2. Polyamide moulding composition according to claim 1, **characterized in that** the components (A) to (F) are comprised in the following amounts:
(A) 32.5 to 72.5 % by weight, preferably 43.0 to 66.75 % by weight of the at least one partially crystalline polyamide,
(B) 2.0 to 7.0 % by weight, preferably 2.5 to 6.0 % by weight of at least one polyamide different from component (A),
(C) 25.0 to 50.0 % by weight, preferably 30.0 to 45.0 % by weight of at least one fibrous reinforcing agent,
(D) 0.3 to 1.5% by weight, preferably 0.35 to 1.0 % by weight of at least one azine dye,
(E) 0.2 to2.0 % by weight, preferably 0.2 to 1.5 % by weight, more preferably 0.3 to 1.0 % by weight of at least one heat stabilizer,
(F) 0 to 7.0 % by weight, preferably 0.1 to 4.0 % by weight of at least one additive,
whereby the entirety of components (A) to (F) add up to 100 % by weight.

3. Polyamide moulding composition according to one of the preceding claims, **characterized in that** the partially crystalline polyamide (A)
has a melting point of 285 to 335 °C, preferred of 290 to 330 °C, most preferred of 295 to 325 °C, measured according to DIN EN ISO 11357-3:2013-04 and/or
a solution viscosity ηᵣₑₗ measured according to DIN EN ISO 307:2013-08 on solutions of 0.5 g polymer in 100 mL m-cresol at a temperature of 20°C, of a maximum of 2.60, preferably in the range from 1.4-2.3, further preferred in the range from 1.45-2.00, further preferred in the range from 1.50-1.90 and especially from 1.55 to 1.85.

4. Polyamide moulding composition according to one of the preceding claims, **characterized in that** the at least one partially crystalline polyamide (A) are produced by polycondensation of
a) 30-100 mol%, especially 50-100 mol% terephthalic acid and/or naphthalene dicarboxylic acid, and 0-70 mol%, especially 0-50 mol%, of at least one aliphatic dicarboxylic acid having 6-12 carbon atoms, and/or 0-70 mol%, especially 0-50 mol% of at least one cycloaliphatic dicarboxylic acid having 8-20 carbon atoms, and/or 0-50 mol% isophthalic acid, with respect to the total amount of the dicarboxylic acids,
b) 80-100 mol% of at least one linear or branched aliphatic diamine having 4-18 carbon atoms, preferably 6-12 carbon atoms, and 0-20 mol% of at least one cycloaliphatic diamine, preferably one having 6-20 carbon atoms, such as MACM, PACM, BAC and/or IPDA, and/or 0-20 mol% of at least one araliphatic diamine such as MXDA and/or PXDA, with respect to the total amount of the diamines, and optionally
c) aminocarboxylic acids and/or lactams, each having 6-12 carbon atoms.

5. Polyamide moulding composition according to one of the preceding claims, **characterized in that** the at least one semiaromatic polyamide (A) is selected from the group consisting of
- PA 6T/6I having 57-73 mol%, preferred 62-72 mol% hexamethyleneterephthalamide units and 27-43 mol%, preferred 28-38 mol% hexamethyleneisophthalamide units,
- PA 6T/10T having 10-40 mol% hexamethyleneterephthalamide (6T) and 60-90 mol% decamethyleneterephthalamide (10T) units.

6. Polyamide moulding composition according to one of the preceding claims, **characterized in that** the at least one polyamide of component (B) is selected from the group consisting of
partially crystalline polyamides (B1) based on aliphatic or araliphatic diamines and aliphatic dicarboxylic acids, especially PA 46, PA 56, PA 6, PA 66, PA 6/66, PA 69, PA 610, PA 612, PA 614, PA 1010, PA 1012, PA 1014, PA 1212, PA 11, PA 12, PA 6/12, PA MXD6, PA MXD10 and also copolymers and mixtures thereof and
amorphous polyamides (B2) based on cycloaliphatic or aromatic dicarboxylic aids or diamines, especially PA 5I, PA 6I, PA DI (D=2-methyl-1,5-pentandiamine), PA 5I/5T, PA DI/DT, PA 6T/6I, PA5I/5T/6I/6T, PA 5I/5T/DI/DT, PA6I/6T/DI/DT, PA 6I/10I, PA 10I/10T, PA MXDI, PA MXD6/MXDI, PA MACM10, PA MACM12, PA MACM14 and also copolymers and mixtures thereof.

7. Polyamide moulding composition according to one of the preceding claims, **characterized in that** the at least one fibrous reinforcing agent is selected from the group consisting of glass fibers such as E glass fibers, A glass fibers, C glass fibers, D glass fibers, M glass fibers, S glass fibers or R glass fibers and/or carbon fibers, wherein preferably
the fibres are selected from the group consisting of
short fibres with a length of 0.1-50 mm, preferably 0.2-20 mm, especially preferred 2-12mm or endless fibres (rovings),
fibers with a diameter of 5 - 40 µm, preferably 10-20 µm, especially 12-18 µm or 5 to 10 µm, preferably 6 to 8 µm,
fibers with a circular or noncircular cross section, wherein fibers with a non-cirular cross section preferably have an aspect ratio (long axis of cross section to secondary axis) of > 2, more preferably lies in the range of 3-8, and especially lies in the range of 3-5 and/or wherein the dimension of the long axis of the cross section preferably lies in the range of 6-40 µm, especially in the range of 15-30 µm, and the length of the secondary cross-sectional axis lies in the range of 3-20 µm, especially in the range of 4-10 µm,
a combination of the aforementioned fibers.

8. Polyamide moulding composition according to one of the preceding claims, **characterized in that** the at least one azine dye
is selected from the group consisting of nigrosines and indulines, preferably is selected from the group consisting of C.I. SOLVENT BLACK 7, C.I. Acid Black 2, C.I. SOLVENT BLACK 5, C.I. SOLVENT BLACK 5:1, C.I. SOLVENT BLACK 5:2, Spirit Black SB, Spirit Black SSBB, Spirit Black AB, Nigrosine Base SA, Nigrosine Base SAP, Nigrosine Base SAP-L, Nigrosine Base EE, Nigrosine Base EE-L, Nigrosine Base EX, Nigrosine Base EX-BP, and/or
the at least one azine dye, especially the at least one nigrosine is comprised as a powder with a volume average particle size X50 (Dv50) according to ISO 13320:2009 from 5 to 20 µm, preferably from 5 to 15 µm.

9. Polyamide moulding composition according to one of the preceding claims, **characterized in that** the at least one heat stabilizer is selected from the group consisting of
a) compounds of mono- or divalent copper, preferably are selected from the group consisting of salts of mono- or divalent copper with inorganic or organic acids or a mono- or dihydric phenol, the oxides of mono- or divalent copper, or the complex compounds of copper salts with ammonia, amines, amides, lactams, cyanides or phosphines, preferably Cu(I) or Cu(II) salts of the halohydric acids, cyanohydric acids or the copper salts of aliphatic carboxylic acids, preferably CuCl, CuBr, Cul, CuCN and Cu₂O, CuCl₂, CuSO₄, CuO, copper(II) acetate or copper(II) stearate,
b) stabilizers based on secondary aromatic amines, preferably adducts of phenylenediamine with acetone (Naugard A), adducts of phenylenediamine with linolene, Naugard 445, N,N'-dinaphthyl-p-phenylenediamine, N-phenyl-N'-cyclohexyl-p-phenylenediamine or mixtures of two or more thereof, especially N,N'-hexameth-ylenebis-3-(3,5-di-tert-butyl-4-hydroxyphenyl)propionamide, bis(3,3-bis(4'-hydroxy-3'-tert-butylphenyl)butanoic acid) glycol ester, 2,1'-thioethylbis-(3-(3,5-di-tert-butyl-4-hydroxyphenyl)propionate, 4,4'-butylidenebis(3-methyl-6-tert-butylphenol), triethylene glycol-3-(3-tert-butyl-4-hydroxy-5-methylphenyl)propionate, or mixtures of two or more of these stabilizers,
c) stabilizers based on sterically hindered phenols,
d) phosphites and phosphonites such as triphenyl phosphite, diphenylalkyl phosphite, phenyl dialkyl phosphite, tris(nonylphenyl)-phosphite, trilauryl phosphite, trioctadecyl phosphite distearylpentaerythritol diphosphite, tris(2,4-di-tert-butylphenyl) phosphite, diisodecylpentaerythritol diphosphite, bis(2,4-di-tert-butylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl))pentaerythritol diphosphite, tristearyl sorbitol triphosphite, tetrakis(2,4-di-tert-butylphenyl)-4,4'-biphenylene diphosphonite, 6-isooctyloxy-2,4,8,10-tetra-tert-butyl-12H-dibenz[d,g]-1,3,2-dioxaphosphocine, 6-fluoro-2,4,8,10-tetra-tert-butyl-12-methyldibenz[d,g]-1,3,2-diox-aphosphocine, bis(2,4-di-tert-butyl-6-methylphenyl)methyl phosphite and bis(2,4-di-tert-butyl-6-methylphenyl)ethyl phosphite. Especially preferred are tris[2-tert-butyl-4-thio-(2'-methyl-4'-hydroxy-5'-tertbutyl)phenyl-5-methyl) phenyl phosphite and tris(2,4-di-tert-butylphenyl)phosphite (Hostanox^{®} PAR24, commercial product of Clariant, Basel),
e) metal salts or metal oxides, especially originating from transition metals, whereby iron salts or iron oxides are preferred,
f) and mixtures of the above-mentioned stabilizers.

10. Polyamide moulding composition according to one of the preceding claims, **characterized in that** the at least one additive is selected from the group consisting of UV- and light-stabilisers, lubricants, colouring- and marking materials, inorganic pigments, organic pigments, IR absorbers, antistatic agents, antiblocking agents, crystal-growth inhibitors, condensation catalysts, chain extenders, defoamers, chain-lengthening additives, conductivity additives, carbon black, graphite, carbon nanotubes, mould-release agents, separating agents, flame retardants, non-halogen-containing flame retardants, anti-dripping-agents, impact modifiers, optical brighteners, photochromic additives and metallic pigments.

11. Polyamide moulding composition according to one of the preceding claims, **characterized by** a deflection temperature under load (HDT (A), 1.80 MPa) according to DIN EN ISO 75-1:2013 and DIN EN ISO 75-2:2013 of at least 250 °C, preferably of at least 260 °C, and more preferably of at least 270 °C.

12. Method of producing a moulded article in which a polyamide moulding composition according to one of the preceding claims is transformed into the moulded article by assisted injection moulding, preferably by gas or liquid assisted injection moulding.

13. Moulded article producible from the polyamide moulding composition according to one of the claims 1 to 11, preferably according to the method according to the preceding claim, especially in the form of tubes or tube sections, connectors, pipes, fittings, intakes or outlets, housings or covers with integrated connectors, pipes, fittings, intakes or outlets, in particular in the automotive field, or pellets, wherein preferably at least a part of the surface has a roughness measured according to DIN EN ISO 4287 (2010-07) with Ra values of less than 4.2 µm, preferably less than 4 µm, especially preferred less than 4.0 µm and/or Rz values of less than 25 µm, preferably less than 20 µm, especially preferred of less than 18 µm.

## Patentansprüche

1. Polyamid-Formmasse, bestehend aus den folgenden Komponenten:
(A) 30 bis 77,6 Gew.-% mindestens eines teilkristallinen Polyamids, das aus mindestens einem Diamin und mindestens einer aromatischen Dicarbonsäure besteht, wobei das mindestens eine Diamin 4 bis 20 Kohlenstoffatome aufweist und aus einer Gruppe von Diaminen ausgewählt ist, die aus linearen aliphatischen Diaminen, verzweigten aliphatischen Diaminen, cycloaliphatischen Diaminen und araliphatischen Diaminen besteht, wobei das mindestens eine teilkristalline Polyamid ausgewählt ist aus der Gruppe bestehend aus
- PA 6T/6, PA 6T/610, PA 6T/612, PA 6T/10I, PA 6T/12T,
- PA 6T/6I mit 50-80 mol% Hexamethylenterephthalamid-Einheiten und 20-50 mol% Hexamethylenisophthalamid-Einheiten,
- ein teilkristallines Polyamid 6T/6I/612/X mit 60-75 Gew.-% Hexamethylenterephthalamid-Einheiten (6T), 20-35 Gew.-% Hexamethylenisophthalamid-Einheiten (6I), 3-15 Gew.-% Hexamethylendodecanamid-Einheiten (612) und 0-5 Gew.- Einheiten X, ausgewählt aus den folgenden Einheiten 66, 68, 69, 610, 6 oder einer Mischung dieser Einheiten, wobei die Summe der Bestandteile 100 Gew.-% des Polyamids 6T/61/612/X beträgt,
- ein teilkristallines Polyamid 6T/6I/612/X mit 60-75 Gew.-% Hexamethylenterephthalamid-Einheiten (6T), 20-35 Gew.-% Hexamethylenisophthalamid-Einheiten (6I), 5-20 Gew.-% Einheiten X, ausgewählt aus den folgenden Einheiten 66, 68, 69, 610, 612, 6 oder einer Mischung dieser Einheiten, wobei die Summe der Bestandteile 100 Gew.-% des Polyamids 6T/61/X beträgt,
- PA 6T/10T mit 10-60 Mol-% Hexamethylenterephthalamid (6T) und 40-90 Mol-% Decamethylenterephthalamid (10T) Einheiten,
- PA 6T/10T/6I mit 50-90 Mol-% Hexamethylenterephthalamid-Einheiten (6T), und 5-45 Mol-% Hexamethylenterephthalamid-Einheiten (6I), und 5-45 Mol-% Decamethylenterephthalamid-Einheiten (10T),
- PA 6T/6I/6 mit 60-85 Mol-% Hexamethylenterephthalamid-Einheiten (6T) und 15-40 Mol-% Hexamethylenisophthalamid-Einheiten (6I), das zusätzlich 5-15 Gew.-% Caprolactam enthält,
wobei das teilkristalline Polyamid (A) einen Schmelzpunkt von mindestens 280 °C, bevorzugt von 285 bis 335 °C, weiter bevorzugt von 290 bis 330 °C, am meisten bevorzugt von 295 bis 325 °C, gemessen nach DIN EN ISO 11357-3:2013-04, aufweist,
(B) 2,0 bis 10 Gew.-% mindestens eines von dem Bestandteil (A) verschiedenen Polyamids,
(C) 20 bis 55 Gew.-% mindestens eines faserigen Verstärkungsmittels,
(D) 0,3 bis 2,0 Gew.-% mindestens eines Azinfarbstoffs,
(E) 0,1 bis 3,0 Gew.-% mindestens eines Hitzestabilisators,
(F) 0 bis 10 Gew.-% mindestens eines Zusatzstoffes, der sich von den Bestandteilen (A) - (E) unterscheidet,
wobei sich die Gesamtheit der Komponenten (A) bis (F) auf 100 Gew.-% addiert.

2. Polyamid-Formmasse nach Anspruch 1, **dadurch gekennzeichnet, dass** die Komponenten (A) bis (F) in den folgenden Mengen enthalten sind:
(A) 32,5 bis 72,5 Gew.-%, vorzugsweise 43,0 bis 66,75 Gew.-% des mindestens einen teilkristallinen Polyamids,
(B) 2,0 bis 7,0 Gew.-%, vorzugsweise 2,5 bis 6,0 Gew.-%, mindestens eines von Komponente (A) verschiedenen Polyamids,
(C) 25,0 bis 50,0 Gew.-%, vorzugsweise 30,0 bis 45,0 Gew.-%, mindestens eines faserigen Verstärkungsmittels,
(D) 0,3 bis 1,5 Gew.-%, vorzugsweise 0,35 bis 1,0 Gew.-%, mindestens eines Azinfarbstoffs,
(E) 0,2 bis 2,0 Gew.-%, vorzugsweise 0,2 bis 1,5 Gew.-%, besonders bevorzugt 0,3 bis 1,0 Gew.-% mindestens eines Hitzestabilisators,
(F) 0 bis 7,0 Gew.-%, vorzugsweise 0,1 bis 4,0 Gew.-%, mindestens eines Zusatzstoffes,
wobei sich die Gesamtheit der Bestandteile (A) bis (F) auf 100 Gew.-% addiert.

3. Polyamid-Formmasse nach einem der vorhergehenden Ansprüche, **dadurch gekennzeichnet, dass** das teilkristalline Polyamid (A)
einen Schmelzpunkt von 285 bis 335 °C, bevorzugt von 290 bis 330 °C, besonders bevorzugt von 295 bis 325 °C, gemessen nach DIN EN ISO 113573:2013-04, aufweist und/oder
eine Lösungsviskosität ηrel, gemessen nach DIN EN ISO 307:2013-08 an Lösungen von 0,5 g Polymer in 100 ml m-Kresol bei einer Temperatur von 20 °C, von maximal 2,60, vorzugsweise im Bereich von 1,4-2,3, weiter bevorzugt im Bereich von 1,45-2,00, weiter bevorzugt im Bereich von 1,50-1,90 und insbesondere von 1,55 bis 1,85.

4. Polyamid-Formmasse nach einem der vorhergehenden Ansprüche, **dadurch gekennzeichnet, dass** das mindestens eine teilkristalline Polyamid (A) durch Polykondensation von
a) 30-100 Mol-%, insbesondere 50-100 Mol-% Terephthalsäure und/oder Naphthalindicarbonsäure, und 0-70 Mol-%, insbesondere 0-50 Mol-% mindestens einer aliphatischen Dicarbonsäure mit 6-12 Kohlenstoffatomen, und/oder 0-70 Mol-%, insbesondere 0-50 Mol-% mindestens einer cycloaliphatischen Dicarbonsäure mit 8-20 Kohlenstoffatomen, und/oder 0-50 Mol-% Isophthalsäure, bezogen auf die Gesamtmenge der Dicarbonsäuren,
b) 80-100 Mol-% mindestens eines linearen oder verzweigten aliphatischen Diamins mit 4-18 Kohlenstoffatomen, vorzugsweise 6-12 Kohlenstoffatomen, und 0-20 Mol-% mindestens eines cycloaliphatischen Diamins, vorzugsweise eines mit 6-20 Kohlenstoffatomen, wie MACM, PACM, BAC und/oder IPDA, und/oder 0-20 Mol-% mindestens eines araliphatischen Diamins wie MXDA und/oder PXDA, bezogen auf die Gesamtmenge der Diamine, und gegebenenfalls
c) Aminocarbonsäuren und/oder Lactame, die jeweils 6-12 Kohlenstoffatome aufweisen.

5. Polyamid-Formmasse nach einem der vorhergehenden Ansprüche, **dadurch gekennzeichnet, dass** das mindestens eine semiaromatische Polyamid (A) ausgewählt ist aus der Gruppe bestehend aus
- PA 6T/6I mit 57-73 Mol-%, vorzugsweise 62-72 Mol-% Hexamethyl- eneterephthalamid-Einheiten und 27-43 Mol-%, vorzugsweise 28-38 Mol-% Hexa-methylenisophthalamid-Einheiten,
- PA 6T/10T mit 10-40 Mol-% Hexamethylenterephthalamid (6T) und 60-90 Mol-% Decamethylenterephthalamid (10T) Einheiten.

6. Polyamid-Formmasse nach einem der vorhergehenden Ansprüche, **dadurch gekennzeichnet, dass** das mindestens eine Polyamid der Bestandteile (B) ausgewählt ist aus der Gruppe bestehend aus
teilkristalline Polyamide (B1) auf Basis von aliphatischen oder araliphatischen Diaminen und aliphatischen Dicarbonsäuren, insbesondere PA 46, PA 56, PA 6, PA 66, PA 6/66, PA 69, PA 610, PA 612, PA 614, PA 1010, PA 1012, PA 1014, PA 1212, PA 11, PA 12, PA 6/12, PA MXD6, PA MXD10 sowie deren Copolymere und Mischungen und
amorphe Polyamide (B2) auf Basis von cycloaliphatischen oder aromatischen Dicarbonsäuren oder Diaminen, insbesondere PA 5I, PA 6I, PA DI (D=2-Methyl-1,5-pentandiamin), PA 5I/5T, PA DI/DT, PA 6T/6I, PA5I/5T/6I/6T, PA 5V5TIDIIDT, PA6V6T/DVDT, PA 6I/10I, PA 10I/10T, PA MXDI, PA MXD6/MXDI, PA MACM10, PA MACM12, PA MACM14 sowie Copolymere und Mischungen davon.

7. Polyamid-Formmasse nach einem der vorhergehenden Ansprüche, **dadurch gekennzeichnet, dass** das mindestens eine faserige Verstärkungsmittel ausgewählt ist aus der Gruppe bestehend aus Glasfasern wie E-Glasfasern, A-Glasfasern, C-Glasfasern, D-Glasfasern, M-Glasfasern, S-Glasfasern oder R-Glasfasern und/oder Kohlenstofffasern, wobei vorzugsweise
die Fasern ausgewählt sind aus der Gruppe bestehend aus Kurzfasern mit einer Länge von 0,1-50 mm sind, vorzugsweise 0,2-20 mm, besonders bevorzugt 2-12 mm oder Endlosfasern (Rovings),
Fasern mit einem Durchmesser von 5 - 40 µm, vorzugsweise 10-20 µm, insbesondere 12-18 µm oder 5 bis 10 µm, vorzugsweise 6 bis 8 µm,
Fasern mit kreisförmigem oder nicht kreisförmigem Querschnitt, wobei Fasern mit nicht kreisförmigem Querschnitt vorzugsweise ein Seitenverhältnis (Längsachse des Querschnitts zur Sekundärachse) von > 2 aufweisen, weiter bevorzugt im Bereich von 3-8 und insbesondere im Bereich von 3-5 liegt und/oder wobei die Abmessung der Längsachse des Querschnitts vorzugsweise im Bereich von 6-40 µm liegt, insbesondere im Bereich von 15-30 µm, und die Länge der sekundären Querschnittsachse liegt im Bereich von 3-20 µm, insbesondere im Bereich von 4-10 µm,
eine Kombination der vorgenannten Fasern.

8. Polyamid-Formmasse nach einem der vorhergehenden Ansprüche, **dadurch gekennzeichnet, dass** der mindestens eine Azinfarbstoff
ausgewählt ist aus der Gruppe bestehend aus Nigrosinen und Indulinen, vorzugsweise ausgewählt ist aus der Gruppe bestehend aus C.I. SOLVENT BLACK 7, C.I. Acid Black 2, C.I. SOLVENT BLACK 5, C.I. SOLVENT BLACK 5:1, C.I. SOLVENT BLACK 5:2, Spirit Black SB, Spirit Black SSBB, Spirit Black AB, Nigrosin Base SA, Nigrosin Base SAP, Nigrosin Base SAP-L, Nigrosin Base EE, Nigrosin Base EE-L, Nigrosin Base EX, Nigrosin Base EX-BP, und/oder
der mindestens eine Azinfarbstoff, insbesondere das mindestens eine Nigrosin, setzt sich zusammen als Pulver mit einer volumengemittelten Teilchengröße X50 (Dv50) gemäß ISO 13320:2009 von 5 bis 20 µm, vorzugsweise von 5 bis 15 µm.

9. Polyamid-Formmasse nach einem der vorhergehenden Ansprüche, **dadurch gekennzeichnet, dass** der mindestens eine Hitzestabilisator ausgewählt ist aus der Gruppe bestehend aus
a) Verbindungen des ein- oder zweiwertigen Kupfers, vorzugsweise ausgewählt aus der Gruppe der Salze des ein- oder zweiwertigen Kupfers mit anorganischen oder organischen Säuren oder einem ein- oder zweiwertigen Phenol, den Oxiden des ein- oder zweiwertigen Kupfers oder den Komplexverbindungen der Kupfersalze mit Ammoniak, Aminen, Amiden, Lactamen, Cyaniden oder Phosphinen, vorzugsweise Cu(I)- oder Cu(II)-Salze der Halogenwasserstoffsäuren, Cyanwasserstoffsäuren oder die Kupfersalze aliphatischer Carbonsäuren, vorzugsweise CuCl, CuBr, Cui, CuCN und Cu2O, CuCl2, CuSO4, CuO, Kupfer(II)-acetat oder Kupfer(II)-stearat,
b) Stabilisatoren auf Basis sekundärer aromatischer Amine, vorzugsweise Addukte von Phenylendiamin mit Aceton (Naugard A), Addukte von Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon, insbesondere N,N'-Hexameth-ylenbis-3-(3, 5-Di-tert-butyl-4-hydroxyphenyl)propionamid, Bis(3,3-bis(4'-hydroxy-3'-tert-butylphenyl)butansäure)glykolester, 2,1'-Thioethylbis-(3-(3,5-di-tert-butyl-4-hydroxyphenyl)propio- nat, 4,4'-Butylidenbis(3-methyl-6-tert-butylphenol), Triethylenglykol-3-(3-tert-butyl-4-hydroxy-5-methylphenyl)propionat oder Mischungen aus zwei oder mehreren dieser Stabilisatoren,
c) Stabilisatoren auf der Basis von sterisch gehinderten Phenolen,
d) Phosphite und Phosphonite wie Triphenylphosphit, Diphenylalkylphosphit, Phenyldialkylphosphit, Tris(nonylphenyl)-phosphit, Trilaurylphosphit, Trioctadecylphosphit, Bis(2,4-di-tert-butylphenyl)-pentaerythritdiphosphit, Tris(2, 4-di-tert-Butylphenyl)-phosphit, Diisodecylpentaerythritdiphosphit, Bis(2,4-di-tert-Butylphenyl)pentaerythritdiphosphit, Bis(2,6-di-tert-Butyl-4-methylphenyl)pentaerythritdiphosphit, Diisodecyloxypentaerythritdiphosphit, Bis(2, 4-Di-tert-butyl-6-methylphenyl)-pentaerythritdiphosphit, Bis(2,4,6-tris(tert-butylphenyl))-pentaerythritdiphosphit, Tristearylsorbit-Triphosphit, Tetrakis(2,4-di-tert-butylphenyl)-4,4'-biphenylendiphosphonit, 6-Isooctyloxy- 2,4,8, 10-Tetra-tert-butyl-12H-dibenz[d,g]-1,3,2-di-oxaphosphocin, 6-Fluor-2,4,8,10-Tetra-tert-butyl-12-methyldi-benz[d,g]-1,3,2-diox-aphosphocin, Bis(2,4-di-tert-butyl-6-methylphenyl)methylphosphit und Bis(2,4-di-tert-butyl-6-methylphenyl)ethylphosphit. Besonders bevorzugt sind Tris[2-tert-butyl-4-thio-(2'-methyl-4'-hydroxy-5'-tertbutyl)phenyl-5-methyl)phenylphosphit und Tris(2,4-di-tert-butylphenyl)phosphit (Hostanox^{®} PAR24, Handelsprodukt von Clariant, Basel),
e) Metallsalze oder Metalloxide, insbesondere von Übergangsmetallen, wobei Eisensalze oder Eisenoxide bevorzugt werden,
f) und Mischungen der vorgenannten Stabilisatoren.

10. Polyamid-Formmasse nach einem der vorhergehenden Ansprüche, **dadurch gekennzeichnet, dass** das mindestens eine Additiv ausgewählt ist aus der Gruppe bestehend aus UV- und Lichtstabilisatoren, Gleitmitteln, Farb- und Markierungsstoffen, anorganischen Pigmenten, organischen Pigmenten, IR-Absorbern, Antistatika, Antiblockmitteln, Kristallwachstumsinhibitoren, Kondensationskatalysatoren, Kettenverlängerern, Entschäumern, Kettenverlängerungsadditiven, Leitfähigkeitsadditiven, Carbon Black, Graphit, Kohlenstoffnanoröhren, Formtrennmitteln, Flammschutzmitteln, halogenfreien Flammschutzmitteln, Antitropfmitteln, Schlagzähmodifikatoren, optischen Aufhellern, photochromen Additiven und Metallpigmenten.

11. Polyamid-Formmasse nach einem der vorhergehenden Ansprüche, **gekennzeichnet durch** eine Biegetemperatur unter Last (HDT (A), 1,80 MPa) nach DIN EN ISO 75-1:2013 und DIN EN ISO 752:2013 von mindestens 250 °C, vorzugsweise von mindestens 260 °C und besonders bevorzugt von mindestens 270 °C.

12. Verfahren zur Herstellung eines Formkörpers, bei dem eine Polyamid-Formmasse nach einem der vorhergehenden Ansprüche durch assistiertes Spritzgießen, vorzugsweise durch gas- oder flüssigkeitsunterstütztes Spritzgießen, in den Formkörper umgewandelt wird.

13. Formkörper, herstellbar aus der Polyamid-Formmasse nach einem der Ansprüche 1 bis 11, vorzugsweise nach dem Verfahren gemäß dem vorhergehenden Anspruch, insbesondere in Form von Schläuchen oder Schlauchabschnitten, Verbindern, Rohren, Fittings, Ein- oder Auslässen, Gehäusen oder Abdeckungen mit integrierten Verbindern, Rohren, Fittings, Ein- oder Auslässen, insbesondere im Automobilbereich, oder Granulat, wobei vorzugsweise zumindest ein Teil der Oberfläche eine nach DIN EN ISO 4287 (2010-07) gemessene Rauheit mit Ra-Werten von weniger als 4,2 µm, vorzugsweise weniger als 4 µm, besonders bevorzugt weniger als 4,0 µm und/oder Rz-Werten von weniger als 25 µm, vorzugsweise weniger als 20 µm, besonders bevorzugt von weniger als 18 µm.

## Revendications

1. Composition de moulage de polyamide comprenant les composants suivants :
(A) de 30 à 77,6 % en poids d'au moins un polyamide partiellement cristallin comprenant au moins une diamine et au moins un acide dicarboxylique aromatique, la au moins une diamine présentant de 4 à 20 atomes de carbone et étant choisie dans un groupe de diamines constitué de diamines aliphatiques linéaires, de diamines aliphatiques ramifiées, de diamines cyclo-aliphatiques et de diamines araliphatiques, dans laquelle ledit au moins un polyamide partiellement cristallin est choisi dans le groupe comprenant
- PA 6T/6, PA 6T/610, PA 6T/612, PA 6T/10I, PA 6T/12T,
- PA 6T/6I présentant de 50 à 80 % en mole d'unités d'hexaméthylène téréphtalamide et de 20 à 50 % en mole d'unités d'hexaméthylène isophtalamide,
- un polyamide semi-cristallin 6T/6I/612/X présentant de 60 à 75 % en poids d'unités d'hexaméthylène téréphtalamide (6T), 20 à 35 % en poids d'unités hexaméthylène isophtalamide (6I), de 3 à 15 % en poids d'unités d'hexaméthylène décanamide (612) et de 0 à 5 % en poids d'unités X choisies parmi les unités 66, 68, 69, 610, 6 suivantes ou un mélange de ces unités, la somme des composants étant de 100 % en poids du polyamide 6T/6I/612/X,
- un polyamide semi à cristallin 6T/6I/X présentant 60 à 75 % en poids d'unités hexaméthylène téréphtalamide (6T), de 20 à 35 % en poids d'unités hexaméthylène isophtalamide (6I), de 5 à 20 % en poids d'unités X choisies parmi les unités 66, 68, 69, 610, 612, 6 suivantes ou un mélange de ces unités, moyennant quoi la somme des composants est 100 % en poids du polyamide 6T/6I/X,
- PA 6T/10T présentant de 10 à 60 % en mole d'unités d'hexaméthylènetéréphtalamide (6T) et de 40 à 90 % en mole d'unités de décaméthylène téréphtalamide (10T),
- PA 6T/10T/6I présentant de 50 à 90 % en mole d'unités d'hexaméthylène téréphtalamide (6T), et de 5 à 45 % en mole d'unités d'hexaméthylène téréphtalamide (6I), et de 5 à 45 % en mole d'unités de décaméthylène téréphtalamide (10T),
- PA 6T/6I/6 présentant de 60 à 85 % en mole d'unités d'hexaméthylène téréphtalamide (6T) et de 15 à 40 % en mole d'unités d'hexaméthylène isophtalamide (6I), qui contient en outre de 5 à 15 % en poids de caprolactame,
dans laquelle le polyamide partiellement cristallin (A) présente un point de fusion d'au moins 280°C, de préférence de 285 à 335°C, de manière plus préférée de 290 à 330°C, de la manière la plus préférée de 295 à 325°C, mesuré selon DIN EN ISO 11357 à 3:2013-04,
(B) de 2,0 à 10 % en poids d'au moins un polyamide différent du composant (A),
(C) de 20 à 55 % en poids d'au moins un agent de renforcement fibreux,
(D) de 0,3 à 2,0 % en poids d'au moins un colorant azinique,
(E) de 0,1 à 3,0 % en poids d'au moins un stabilisant thermique,
(F) de 0 à 10 % en poids d'au moins un additif, différent des composants (A) à (E),
moyennant quoi l'ensemble des composants (A) à (F) s'élève à 100 % en poids.

2. Composition de moulage de polyamide selon la revendication 1, **caractérisée en ce que** les composants (A) à (F) sont compris dans les quantités suivantes :
(A) de 32,5 à 72,5 % en poids, de préférence de 43,0 à 66,75 % en poids du au moins un polyamide partiellement cristallin,
(B) de 2,0 à 7,0 % en poids, de préférence de 2,5 à 6,0 % en poids d'au moins un polyamide différent du composant (A),
(C) de 25,0 à 50,0 % en poids, de préférence de 30,0 à 45,0 % en poids d'au moins un agent de renforcement fibreux,
(D) de 0,3 à 1,5 % en poids, de préférence de 0,35 à 1,0 % en poids d'au moins un colorant azinique,
(E) de 0,2 à 2,0 % en poids, de préférence de 0,2 à 1,5 % en poids, de manière plus préférée de 0,3 à 1,0 % en poids d'au moins un stabilisant thermique,
(F) de 0 à 7,0 % en poids, de préférence de 0,1 à 4,0 % en poids d'au moins un additif,
moyennant quoi l'ensemble des composants (A) à (F) s'élève à 100 % en poids.

3. Composition de moulage de polyamide selon l'une quelconque des revendications précédentes, **caractérisée en ce que** le polyamide partiellement cristallin (A)
présente un point de fusion de 285 à 335°C, de préférence de 290 à 330°C, de la manière la plus préférée de 295 à 325°C, mesuré selon DIN EN ISO 113573:2013-04 et/ou
une viscosité de solution mesurée ηᵣₑI selon DIN EN ISO 307:2013-08 sur des solutions de 0,5 g de polymère dans 100 ml de m à crésol à une température de 20°C, d'un maximum de 2,60, de préférence dans la plage de 1,4 à 2,3, de manière encore préférée dans la plage de 1,45 à 2,00, de manière encore préférée dans la plage de 1,50 à 1,90, et en particulier de 1,55 à 1,85.

4. Composition de moulage de polyamide selon l'une quelconque des revendications précédentes, **caractérisée en ce que** le au moins un polyamide partiellement cristallin (A) est produit par polycondensation
a) de 30 à 100 % en mole, en particulier de 50 à 100 % en mole d'acide téréphtalique et/ou d'acide naphtalène dicarboxylique, et de 0 à 70 % en mole, en particulier de 0 à 50 % en mole, d'au moins un acide dicarboxylique aliphatique présentant de 6 à 12 atome de carbone, et/ou de 0 à 70 % en mole, en particulier de 0 à 50 % en mole d'au moins un acide dicarboxylique cycloaliphatique présentant de 8 à 20 atomes de carbone, et/ou de 0 à 50 % en mole d'acide isophtalique, par rapport à la quantité totale des acides dicarboxyliques,
b) de 80 à 100 % en mole d'au moins une diamine aliphatique linéaire ou ramifiée présentant de 4 à 18 atomes de carbone, de préférence de 6 à 12 atomes de carbone, et de 0 à 20 % en mole d'au moins une diamine cycloaliphatique, de préférence une présentant de 6 à 20 atomes de carbone, telle que MACM, PACM, BAC et/ou IPDA, et/ou de 0 à 20 % en mole d'au moins une diamine araliphatique telle que MXDA et/ou PXDA, par rapport à la quantité totale des diamines, et facultativement
c) des acides aminocarboxyliques et/ou des lactames, chacun présentant de 6 à 12 atomes de carbone.

5. Composition de moulage de polyamide selon l'une quelconque des revendications précédentes, **caractérisée en ce que** le au moins un polyamide semi-aromatique (A) est choisi dans le groupe comprenant
- PA 6T/6I présentant de 57 à 73 % en mole, de préférence de 62 à 72 % en mole d'unités d'hexaméthylène téréphtalamide et de 27 à 43 % en mole, de préférence de 28 à 38 % en mole d'unités d'hexaméthylène isophtalamide,
- PA 6T/10T présentant de 10 à 40 % en mole d'unités d'hexamé-thylènetéréphtalamide (6T) et de 60 à 90 % en mole d'unités de décaméthylène téréphtalamide (10T).

6. Composition de moulage de polyamide selon l'une quelconque des revendications précédentes, **caractérisée en ce que** le au moins un polyamide du composant (B) est choisi dans le groupe comprenant
des polyamides partiellement cristallins (B1) à base de diamines aliphatiques ou araliphatiques et d'acides dicarboxyliques aliphatiques, notamment PA 46, PA 56, PA 6, PA 66, PA 6/66, PA 69, PA 610, PA 612, PA 614, PA 1010, PA 1012, PA 1014, PA 1212, PA 11, PA 12, PA 6/12, PA MXD6, PA MXD10, ainsi que des copolymères et mélanges de ceux-ci, et
des polyamides amorphes (B2) base d'acides dicarboxyliques cycloaliphatiques ou aromatiques ou de diamines, en particulier PA 5I, PA 6I, PA DI (D= 2-méthyl-1,5-pentandiamine), PA 5I/5T, PA DI/DT, PA 6T/6I, PA5I/5T/6I/6T, PA 5I/5T/DI/DT, PA6I/6T/DI/DT, PA 6I/10I, PA 10I/10T, PA MXDI, PA MXD6/MXDI, PA MACM10, PA MACM12, PA MACM14, ainsi que des copolymères et des mélanges de ceux-ci.

7. Composition de moulage de polyamide selon l'une quelconque des revendications précédentes, **caractérisée en ce que** le au moins un agent de renforcement fibreux est choisi dans le groupe constitué par le groupe comprenant des fibres de verre telles que des fibres de verre E, des fibres de verre A, des fibres de verre C, des fibres de verre D, des fibres de verre M, des fibres de verre S ou des fibres de verre R et/ou des fibres de carbone, dans laquelle de préférence
les fibres sont choisies dans le groupe comprenant
des fibres courtes d'une longueur de 0,1 à 50 mm, de préférence de 0,2 à 20 mm, de manière particulièrement préférée de 2 à 12 mm ou des fibres sans fin (stratifils),
des fibres d'un diamètre de 5 à 40 µm, de préférence de 10 à 20 µm, en particulier de 12 à 18 µm ou de 5 à 10 µm, de préférence de 6 à 8 µm,
des fibres avec une section transversale circulaire ou non circulaire, dans laquelle les fibres avec une section transversale non circulaire présentent de préférence un rapport d'aspect (grand axe de la section transversale par rapport à l'axe secondaire) de > 2, de manière plus préférée se situant dans la plage de 3 à 8, et en particulier se situant dans la plage de 3 à 5 et/ou dans laquelle la dimension du grand axe de la section transversale se situe de préférence dans la plage de 6 à 40 µm, en particulier dans la plage de 15 à 30 µm, et la longueur de l'axe de section transversale secondaire se situe dans la plage de 3 à 20 µm, en particulier dans la plage de 4 à 10 µm,
une combinaison des fibres mentionnées ci-dessus.

8. Composition de moulage de polyamide selon l'une quelconque des revendications précédentes, **caractérisée en ce que** le au moins un colorant azinique
est choisi dans le groupe comprenant des nigrosines et des indulines, de préférence est choisi dans le groupe comprenant C.I. SOLVENT BLACK 7, C.I. Acid Black 2, C.I. SOLVENT BLACK 5, C.I. SOLVENT BLACK 5:1, C.I. SOLVENT BLACK 5:2, Spirit Black SB, Spirit Black SSBB, Spirit Black AB, Nigrosine Base SA, Nigrosine Base SAP, Nigrosine Base SAP à L, Nigrosine Base EE, Nigrosine Base EE à L, Nigrosine Base EX, Nigrosine Base EX à BP, et/ou
le au moins un colorant azinique, en particulier la au moins une nigrosine, est comprise sous la forme d'une poudre avec une taille de particule moyenne en volume X50 (Dv50) selon la norme ISO 13320:2009 de 5 à 20 µm, de préférence de 5 à 15 µm.

9. Composition de moulage de polyamide selon l'une quelconque des revendications précédentes, **caractérisée en ce que** le au moins un stabilisant thermique est choisi dans le groupe comprenant
a) des composés de cuivre mono ou divalent, de préférence sont choisis dans le groupe comprenant des sels de cuivre mono ou divalent avec des acides inorganiques ou organiques ou un phénol mono ou dihydrique, les oxydes de cuivre mono ou divalent, ou les composés complexes de sels de cuivre avec de l'ammoniac, des amines, des amides, des lactames, des cyanures ou des phosphines, de préférence des sels de Cu(I) ou de Cu(II) des acides halohydriques, des acides cyanohydriques ou des sels de cuivre d'acides carboxyliques aliphatiques, de préférence CuCl, CuBr, Cul, CuCN et Cu₂O, CuCl₂, CuSO₄, CuO, l'acétate de cuivre(II) ou le stéarate de cuivre(II),
b) des stabilisants à base d'amines aromatiques secondaires, de préférence des adduits de phénylènediamine avec de l'acétone (Naugard A), des adduits de phénylènediamine avec du lino-lène, de la Naugard 445,N, de la N'-dinaphtyl-p-phénylènediamine, de la N-phényl-N'-cyclohexyl-p-phénylènediamine ou des mélanges de deux de ceux-ci ou plus, en particulier le N,N'-hexaméthylènebis-3-(3,5-di-tert-butyl-4-hydroxyphényl)propionamide, de l'ester glycol d'acide bis (3,3-bis(4'-hydroxy-3'-tert-butylphényl)butanoïque), du 2,1'-thioéthylbis-(3-(3,5-ditert-butyl-4-hydroxyphényl)propionate, du 4,4'-butylidènebis(3-méthyl-6-tert-butylphénol), le triéthylène glycol-3-(3-tert-butyl-4-hydroxy-5-méthylphényl)propionate, ou des mélanges de deux de ces stabilisants ou plus,
c) des stabilisants à base de phénols stériquement encombrés,
d) des phosphites et phosphonites tels que le phosphite de triphényle, le phosphite de diphénylalkyle, le phosphite de phényldialkyle, le phosphite de tris(nonylphényl), le phosphite de trilauryle, le diphosphite de trioctadécylphosphite de distéarylpentaérythritol, le phosphite de tris(2,4-di-tert-butylphényl), le diphosphite de diisodécylpentaérythritol, le diphosphite de bis(2,4-di-tert-butylphényl)pentaérythritol, le diphosphite de bis(2,6-di-tert-butyl-4-méthylphényl)pentaérythritol, le diphosphite de diisodécyloxypentaérythritol, le diphosphite de bis(2,4-di-tert-butyl-6-méthylphényl)pentaérythritol, le diphosphite de bis(2,4,6-tris(tert-butylphényl))pentaérythritol, le triphosphite de tristéaryl sorbitol, le diphosphite de tétrakis (2,4-di-tert-butylphényl)-4,4'-biphénylène diphosphonite, le diphosphonite de 6-isooctyloxy-2,4,8,10-tétra-tert-butyl-12H-dibenz [d, g]-1,2-dioxaphosphine, sont particulièrement préférés le phosphite de tris[2-tert-butyl-4 à thio-(2'-méthyl-4'-hydroxy-5'-tertbutyl) phényl-5-méthyl)phényle et le phosphite de tris(2,4-di- tert-butylphényl) (Hostanox^{®} PAR24, produit commercial de Clariant, Bâle),
e) des sels métalliques ou des oxydes métalliques, notamment provenant de métaux de transition, moyennant quoi les sels de fer ou les oxydes de fer sont préférés,
f) et des mélanges des stabilisants mentionnés ci-dessus.

10. Composition de moulage de polyamide selon l'une quelconques des revendications précédentes, **caractérisée en ce que** le au moins un additif est choisi dans le groupe comprenant des stabilisants aux UV et à la lumière, des lubrifiants, des matériaux de coloration et de marquage, des pigments inorganiques, des pigments organiques, des absorbeurs d'IR, des agents antistatiques, des agents antiblocage, des inhibiteurs de croissance cristalline, des catalyseurs de condensation, des allongeurs de chaîne, des antimousses, des additifs d'allongement de chaîne, des additifs de conductivité, du noir de carbone, du graphite, des nanotubes de carbone, des agents de démoulage, des agents de séparation, des retardateurs de flamme, des retardateurs de flamme ne contenant pas d'halogène, des agents anti-égouttement, des modificateurs de choc, des azurants optiques, des additifs photochromiques et des pigments métalliques.

11. Composition de moulage de polyamide selon l'une quelconque des revendications précédentes, **caractérisée par** une température de déflexion sous charge (HDT (A), 1,80 MPa) selon DIN EN ISO 75-1:2013 et DIN EN ISO 752:2013 d'au moins 250°, de préférence d'au moins 260°C, et de manière plus préférée d'au moins 270°C.

12. Procédé de production d'un article moulé dans lequel une composition de moulage de polyamide selon l'une des revendications précédentes est transformée en l'article moulé par moulage par injection assisté, de préférence par moulage par injection assisté par gaz ou liquide.

13. Article moulé pouvant être produit à partir de la composition de moulage de polyamide selon l'une quelconque des revendications 1 à 11, de préférence selon le procédé selon la revendication précédente, en particulier sous la forme de tubes ou de sections de tubes, de connecteurs, de tuyaux, de raccords, d'entrées ou de sorties, de boîtiers ou de couvercles avec des connecteurs, des tuyaux, des raccords, des entrées ou des sorties intégrés, en particulier dans le domaine automobile, ou de pastilles, dans lequel de préférence au moins une partie de la surface présente une rugosité mesurée selon DIN EN ISO 4287 (2010-07) avec des valeurs Ra inférieures à 4,2 µm, de préférence inférieures à 4 µm, de manière plus préférée inférieures à 4,0 µm et/ou des valeurs Rz inférieures à 25 µm, de préférence inférieures à 20 µm, de manière plus préférée inférieures à 18 µm.
